# EUROPEAN PATENT APPLICATION

(11) **EP 4 692 854 A1**
(43) Date of publication of application: **11.02.2026**
(21) Application number: 24780268.9
(22) Date of filing: 26.03.2024
(51) Int. Cl.: G01S 19/07, A01B 69/00, G01S 19/43

(54) **ASSISTANCE DEVICE FOR WORK MACHINE, ASSISTANCE SYSTEM FOR WORK MACHINE, AND ASSISTANCE METHOD FOR WORK MACHINE**

(30) Priority: 28.03.2023 JP 2023051631
(71) Applicant: KUBOTA CORPORATION, Osaka-shi, Osaka 556-8601 (JP)
(72) Inventor: YUASA Junichi, Sakai-shi, Osaka 590-0908 (JP)
(74) Representative: Müller-Boré & Partner Patentanwälte PartG mbB
(86) International application number: PCT/JP2024/011875
(87) International publication number: WO 2024/204155

(57) **Abstract**

The positioning accuracy of a working machine is improved by appropriately selecting a positioning method.

An assistance device (50) for a working machine (1) includes a first acquirer (52c1) to acquire, from base stations (30) at respective predetermined reference points (RP), one or more satellite signals from one or more positioning satellites (G) received by the base stations; a generator (52m) to generate one or more pieces of first correction information each based on at least one satellite signal acquired by the first acquirer and based on the corresponding reference point of one of the base stations that has received the at least one satellite signal; and generate one or more pieces of second correction information each based on at least one satellite signal received by three or more of the base stations and based on the corresponding reference points of the three or more of the base stations, the one or more pieces of second correction information each including a virtual reference point (VRP), a selector (52K) to select a piece of first correction information or a piece of second correction information of the one or more pieces of first correction information and the one or more pieces of second correction information to be generated by the generator; and a communicator (51) to transmit, to the working machine, the piece of first correction information or the piece of second correction information selected by the selector; wherein the selector is configured or programmed to select the piece of first correction information or the piece of second correction information based on a positional relationship between the working machine and an area (E) defined by a polygon connecting the corresponding reference points of the three or more of the base stations.

## Description

### Technical Field

The present invention relates to an assistance device for a working machine, an assistance system for a working machine, and an assistance method for a working machine.

### Background Art

As disclosed in Patent Literature 1, Real-Time Kinematic (RTK) positioning is known as a technique that enables high-accuracy positioning relatively easily. The RTK positioning includes Real Reference Station (RRS)-GNSS positioning that uses a real reference point (absolute position) of a base station (electronic reference point) as the reference point and Virtual Reference Station (VRS)-GNSS positioning that uses, as the reference point, a virtual reference point virtually created in the vicinity of a rover.

### Citation List

### Patent Literature

PTL 1: Japanese Unexamined Patent Application Publication No. 2021-85800

### Summary of Invention

### Technical Problem

In the positioning methods such as RRS-GNSS and VRS-GNSS, the positioning accuracy of a rover can be improved in the following manner: correction information based on reference point(s) and satellite signals transmitted from positioning satellites is transmitted to the rover; and the position of the rover is calculated at the rover based on satellite signals and the correction information.

Nevertheless, in some cases, depending on the positional relationship between the rover and the nearby base station(s), sufficient positioning accuracy cannot be maintained in the RRS-GNSS and/or the VRS-GNSS methods.

The present invention was made to solve such problems of related technologies, and an object thereof is to provide an assistance device, an assistance system, and an assistance method for a working machine each of which makes it possible to appropriately select a positioning method to improve the positioning accuracy of the working machine.

### Solution to Problem

An assistance device for a working machine according to an example embodiment of the present invention includes a first acquirer to acquire, from base stations at respective predetermined reference points, one or more satellite signals from one or more positioning satellites received by the base stations, a generator to generate one or more pieces of first correction information each based on at least one satellite signal acquired by the first acquirer and based on the corresponding reference point of one of the base stations that has received the at least one satellite signal and generate one or more pieces of second correction information each based on at least one satellite signal received by three or more of the base stations and based on the corresponding reference points of the three or more of the base stations, the one or more pieces of second correction information each including a virtual reference point, a selector to select a piece of first correction information or a piece of second correction information of the one or more pieces of first correction information and the one or more pieces of second correction information to be generated by the generator, and a communicator to transmit, to the working machine, the piece of first correction information or the piece of second correction information selected by the selector, wherein the selector is configured or programmed to select the piece of first correction information or the piece of second correction information based on a positional relationship between the working machine and an area defined by a polygon connecting the corresponding reference points of the three or more of the base stations.

The selector may be configured or programmed to, when the working machine is located outside the area, preferentially select one of the one or more pieces of first correction information that is based on at least one satellite signal received by one of the base stations that is closest to the working machine.

The selector may be configured or programmed to, when a relative distance between the working machine and one of the reference points of the three of the base stations that is closest to the working machine is greater than or equal to a first threshold, preferentially select one of the one or more pieces of first correction information that is based on at least one satellite signal received by one of the base stations that is closest to the working machine.

The assistance device may further include a first monitor to monitor a communication status between (i) a vehicle position detector in or on the working machine to receive satellite signals from the one or more positioning satellites and (ii) the one or more positioning satellites. The selector may be configured or programmed to, when the communication status between the vehicle position detector and the one or more positioning satellites is bad, preferentially select one of the one or more pieces of first correction information that is based on at least one satellite signal received by one of the base stations that is closest to the working machine.

The communication status between the vehicle position detector and the one or more positioning satellites monitored by the first monitor may include an intensity of radio waves received by the vehicle position detector from the one or more positioning satellites. The selector may be configured or programmed to, when the intensity of radio waves is below a second threshold and indicates that the communication status between the vehicle position detector and the one or more positioning satellites is bad, preferentially select one of the one or more pieces of first correction information that is based on at least one satellite signal received by one of the base stations that is closest to the working machine.

The assistance device may further include a second monitor to monitor a communication status between the communicator and the working machine. The selector may be configured or programmed to, when the communication status between the communicator and the working machine is bad, preferentially select one of the one or more pieces of first correction information that is based on at least one satellite signal received by one of the base stations that is closest to the working machine.

The communication status between the communicator and the working machine monitored by the second monitor may include a degree of delay in communication between the communicator and the working machine. The selector may be configured or programmed to, when the degree of delay is greater than or equal to a third threshold and indicates that the communication status between the communicator and the working machine is bad, preferentially select one of the one or more pieces of first correction information that is based on at least one satellite signal received by one of the base stations that is closest to the working machine.

The assistance device may further include a third monitor to monitor a positioning accuracy which is an accuracy of position detection based on one or more of the one or more pieces of second correction information. The selector may be configured or programmed to, when the positioning accuracy is lower than a criterion value, preferentially select one of the one or more pieces of first correction information that is based on at least one satellite signal received by one of the base stations that is closest to the working machine.

The third monitor may be configured or programmed to calculate, using one or more of the one or more pieces of second correction information, a position of another of the base stations other than the three or more of the base stations, and monitor the positioning accuracy based on a positional deviation of the calculated position of the another of the base stations from the corresponding reference point of the another of the base stations.

The assistance device may further include a memory and/or a storage to store one or more combinations of the positioning accuracy and the three or more of the base stations. The selector may be configured or programmed to, when the positioning accuracy stored in the memory and/or the storage is lower than the criterion value, preferentially select one of the one or more pieces of first correction information that is based on at least one satellite signal received by one of the base stations that is closest to the working machine.

The assistance device may further include a second acquirer to acquire work content which is content of work to be done by a working device of the working machine, and a changer to modify the criterion value based on the work content acquired by the second acquirer.

The assistance device may further include a fourth monitor to monitor a status of each of the base stations, and a manager to manage the one or more satellite signals acquired by the first acquirer and to output the one or more satellite signals to the generator. The selector may be configured or programmed to use base stations in which the status is normal as one of the base stations that is closest to the working machine and the three or more of the base stations, and not use base stations in which the status is abnormal as the one of the base stations that is closest to the working machine or the three or more of the base stations, and the manager may be configured or programmed to output, to the generator, one or more satellite signals received by base stations in which the status is normal, and to not output, to the generator, one or more satellite signals received by base stations in which the status is abnormal.

The assistance device may further include a second acquirer to acquire identification information of a vehicle position detector in or on the working machine to detect a position of the working machine, and a memory and/or a storage to store a management table including one or more combinations of the identification information and whether the vehicle position detector is suitable for position detection using second correction information. The selector may be configured or programmed to, if the identification information and the management table show that the vehicle position detector is unsuitable for the position detection using second correction information, preferentially select one of the one or more pieces of first correction information that is based on at least one satellite signal received by one of the base stations that is closest to the working machine.

An assistance system for a working machine according to an example embodiment of the present invention includes an assistance device for a working machine and the working machine.

A method of assisting a working machine according to an example embodiment of the present invention includes a first step including causing a selector of an assistance device to select first correction information or second correction information, the first correction information being based on one or more satellite signals from one or more positioning satellites received by a base station and based on a reference point of the base station having received the one or more satellite signals, the second correction information being based on one or more satellite signals received by three or more base stations and based on reference points of the respective three or more base stations, the second correction information including a virtual reference point, and a second step including causing a communicator of the assistance device to transmit, to the working machine, the first correction information or the second correction information selected by the selector in the first step, wherein the first step includes causing the selector to select the first correction information or the second correction information based on a positional relationship between the working machine and an area defined by a polygon connecting the reference points of the three or more base stations.

### Advantageous Effects of Invention

The above-described assistance device, assistance system, and assistance method for a working machine can improve the positioning accuracy of the working machine by appropriately selecting a positioning method.

### Brief Description of Drawings

[FIG. 1] FIG. 1 is a schematic diagram of an assistance system for a working machine.
[FIG. 2] FIG.2 is a diagram illustrating a working machine traveling automatically.
[FIG. 3] FIG. 3 is an overall side view of a working machine.
[FIG. 4] FIG. 4 is a block diagram of an assistance system for a working machine.
[FIG. 5] FIG. 5 illustrates a data flow in a calculator.
[FIG. 6] FIG. 6 is a first diagram showing a flowchart of steps performed by a selector, a generator, a transmission controller, and a communication controller.
[FIG. 7] FIG. 7 is a second diagram showing a flowchart of steps performed by the selector, the generator, the transmission controller, and the communication controller.
[FIG. 8] FIG. 8 is a third diagram showing a flowchart of steps performed by the selector, the generator, the transmission controller, and the communication controller.
[FIG. 9] FIG. 9 is a fourth diagram showing a flowchart of steps performed by the selector, the generator, the transmission controller, and the communication controller. Description of Embodiments

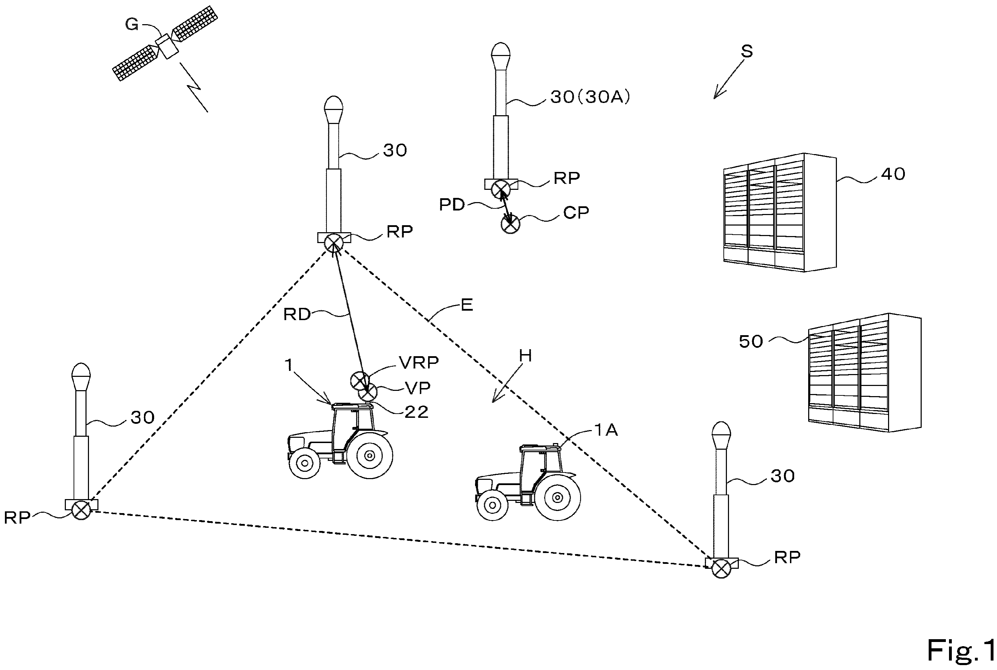

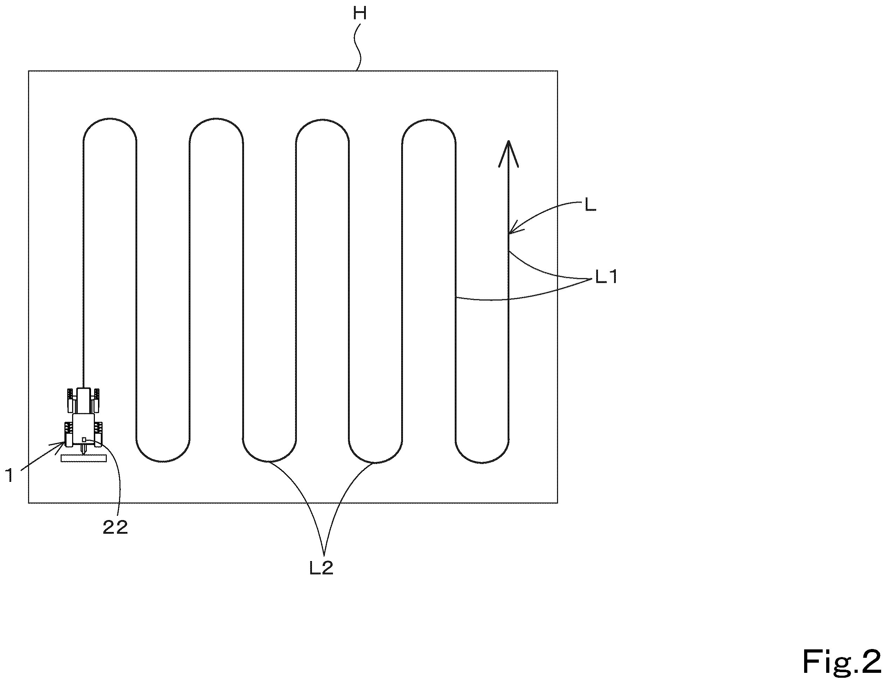

Example embodiments of the present invention will be described below with reference to the drawings. FIG. 1 is a schematic diagram of an assistance system S for a working machine 1. The assistance system S for the working machine 1 includes an assistance device 50 for the working machine 1 and the working machine 1 to detect its own position (vehicle position VP) based on satellite signal(s) transmitted from positioning satellite(s) G and correction information transmitted from the assistance device 50. FIG.2 illustrates the working machine 1 traveling automatically along a planned travel route L based on the detected vehicle position VP. In the present embodiment, the working machine 1 performs automatic travel based on the detected position thereof and the planned travel route L.

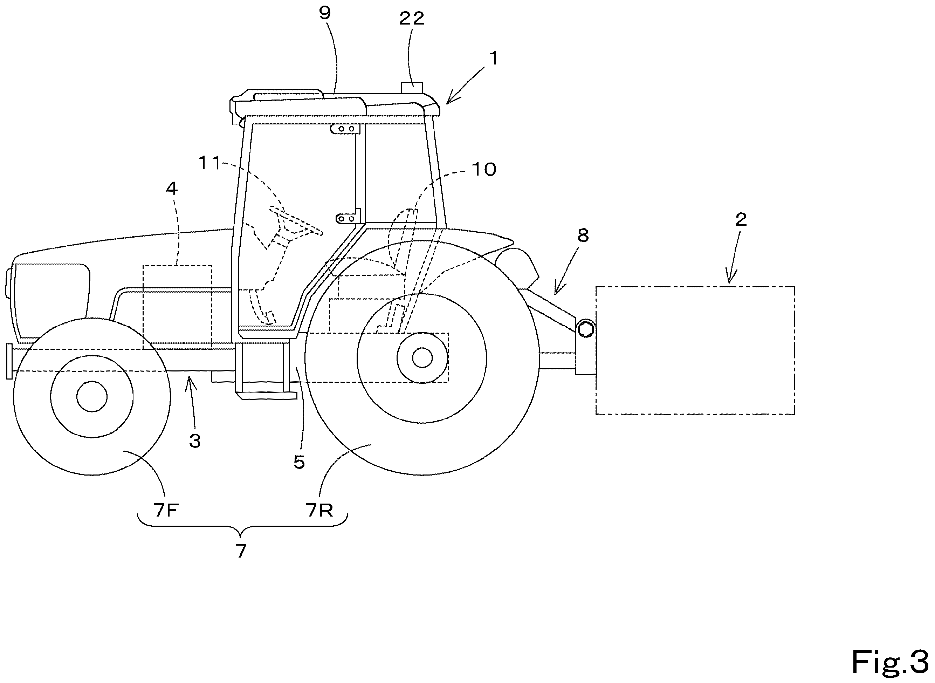

A description will first be made of the working machine 1. The working machine 1 is an agricultural machine, such as a tractor, a combine, or a rice transplanter. FIG. 3 illustrates a tractor as an example of the working machine 1. As illustrated in FIG. 3, the working machine 1 includes a vehicle body 3, a prime mover 4, and a transmission 5. The vehicle body 3 is provided with a traveling device 7. The traveling device 7 includes front wheel(s) 7F and rear wheel(s) 7R. The vehicle body 3 is provided with a cabin 9. The cabin 9 contains an operator's seat 10.

The prime mover 4 is, for example, a diesel engine, an electric motor, and/or the like. The transmission 5 is configured to change speed stages to speed-change power transmitted to the traveling device 7 and switch the rotation direction (switch between forward traveling and backward traveling of the vehicle body 3).

Also as illustrated in FIG. 3, a lifting device 8, including a three-point linkage and/or the like, is provided at a rear portion of the vehicle body 3. The lifting device 8 is configured to attach and detach thereto and therefrom a working device (implement) 2. By coupling the working device 2 to the lifting device 8, the vehicle body 3 can tow the working device 2.

Examples of the working device 2 include diggers for digging potatoes and/or carrots, spreaders such as fertilizer spreaders (fertilizing devices) for spreading fertilizer and agricultural chemical spreaders for spreading agricultural chemicals, seeders for sowing seeds on an agricultural field H, harvesters for harvesting, mowers for mowing grass or the like, tedders for tedding grass or the like, rakes for raking grass or the like, balers for baling grass or the like, ground implements which does work against the agricultural field H, and the like. Examples of the ground implement include stubble cultivators for stubble cultivation, harrows for puddling, tillers (rotary cultivators) for tillage, and the like.

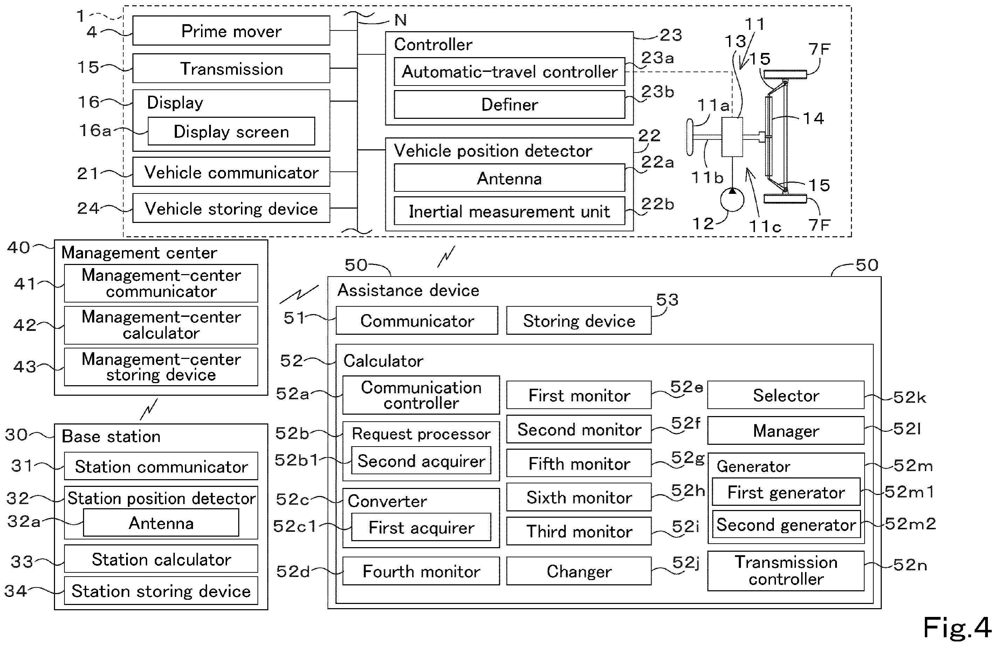

FIG. 4 is a block diagram of the assistance system S for the working machine 1. As illustrated in FIGS. 3 and 4, the working machine 1 includes a steering system 11. The steering system 11 includes a steering wheel 11a, a rotation shaft (steering shaft) 11b which rotates as the steering wheel 11a rotates, and an assist mechanism (power steering mechanism) 11c to assist steering performed using the steering wheel 11a. The assist mechanism 11c includes a hydraulic pump 12, a control valve 13 supplied with hydraulic fluid delivered by the hydraulic pump 12, and a steering cylinder 14 to be actuated by the control valve 13. The control valve 13 is a solenoid valve to be actuated based on a control signal. The control valve 13 is, for example, a three-position switching valve which achieves multi-position switching by movement of a spool or the like. The positions of the control valve 13 can also be switched by steering by the steering shaft 11b. The steering cylinder 14 is connected to arms (knuckle arms) 15 to change the orientation of the front wheels 7F.

Therefore, upon operation of the steering wheel 11a, the position and the degree of opening of the control valve 13 change according to the steering wheel 11a, and the steering cylinder 14 extends or retracts leftward or rightward according to the position and the degree of opening of the control valve 13, making it possible to change the steering direction of the front wheels 7F. Note that the foregoing steering system 11 is an example, and the foregoing configuration does not imply limitation.

As illustrated in FIG. 4, the working machine 1 includes a vehicle communicator 21, a vehicle position detector 22, a controller 23, and a vehicle storing device (memory and/or storage) 24. The vehicle communicator 21 is configured or programmed to transmit various data to a device external to the working machine 1 (to the assistance device 50, for example) and to receive data transmitted from an external device. The vehicle communicator 21 performs wireless communication with external devices via, for example, Wireless Fidelity (Wi-Fi, registered trademark) based on IEEE 802.11, which is a communication standard, a mobile telephone communication network, a data communication network, and/or the like. For example, the vehicle communicator 21 sends a request to the assistance device 50 for correction information for use in positioning using RTK, and receives the correction information from the assistance device 50. The vehicle communicator 21 sends a request for the correction information at predetermined time interval(s).

In the case where the working machine 1 performs RRS-GNSS positioning, the correction information includes, for example, position information (e.g., information including latitude and longitude) of a reference point (absolute position) RP of a base station 30 and distance information relating to the distance between the reference point RP and positioning satellite(s) G. In the case where the working machine 1 performs VRS-GNSS positioning, the correction information includes, for example, position information of a virtual reference point virtually defined in the vicinity of the working machine 1 and distance information relating to the distance between the virtual reference point VRP and positioning satellite(s) G.

The vehicle position detector 22 is configured to receive satellite signals transmitted from positioning satellite(s) G (the location(s) of the positioning satellite(s) G, the transmission time of the satellite signal(s) from the positioning satellite(s) G, and/or the like) to detect the position of the vehicle body 3 (working machine 1) (i.e., vehicle position VP). The vehicle position detector 22 includes an antenna 22a to receive satellite signals. The positioning satellite(s) G is/are included in a satellite positioning system such as D-GPS, GPS, GLONASS, BeiDou, Galileo, and/or Michibiki.

The vehicle position detector 22 detects the vehicle position VP using RTK based on satellite signal(s) received by the antenna 22a and the correction information received by the vehicle communicator 21. When the vehicle communicator 21 receives the correction information, the vehicle position detector 22 performs positioning using RRS-GNSS and/or VRS-GNSS based on the satellite signal(s) and the correction information. As illustrated in FIG. 3, the vehicle position detector 22 is provided on the vehicle body 3, to be specific, on the cabin 9.

Although it is preferable that the vehicle position detector 22 is configured to perform positioning using RRS-GNSS and VRS-GNSS, the vehicle position detector 22 need only be configured to perform positioning using at least RRS-GNSS.

The vehicle position detector 22 may be configured to perform standalone positioning based on satellite signal(s) received by the antenna 22a. In the case where the vehicle position detector 22 includes a plurality of the antennas 22a, the vehicle position detector 22 may be configured to calculate the orientation of the vehicle body 3 (vehicle body orientation) based on the detected vehicle positions VP.

The vehicle position detector 22 may include an inertial measurement unit (IMU) 22b. The inertial measurement unit 22b includes, for example, an acceleration sensor to detect acceleration and/or a gyroscope sensor to detect angular velocity. The information detected by the inertial measurement unit 22b is used to complement the position information which is based on the satellite signal(s) received by the vehicle position detector 22.

The controller 23 is provided in or on the vehicle body 3 or in the cabin 9, and includes, for example, electrical/electronic circuit(s), CPU(s), and/or program(s) stored in one or more memories and/or the like. The controller 23 is configured or programmed to control various equipment connected to an in-vehicle network N of the working machine 1. Furthermore, the controller 23 is configured or programmed to perform a variety of calculation operations based on signals input therein.

The vehicle storing device 24 is a storage medium such as a solid-state drive (SSD) and/or a hard disk drive (HDD) and stores various information relating to the working machine 1.

As illustrated in FIG. 4, the controller 23 includes an automatic-travel controller 23a and a definer 23b. The automatic-travel controller 23a and the definer 23b include electrical/electronic circuit(s), CPU(s), and/or program(s) stored in one or more memories and/or the like provided in the controller 23.

The automatic-travel controller 23a is configured or programmed to control the steering angle of the vehicle body 3 (rotation angle of the steering shaft 11b) and the vehicle speed (travel speed) of the vehicle body 3 such that the vehicle body 3 travels along the planned travel route L. As illustrated in FIG. 2, the planned travel route L includes, for example, straight section(s) L1 for straight travel and turn section(s) L2 for turning.

Note that the planned travel route L may be pre-stored in the vehicle storing device 24 and/or may be created (defined) based on the vehicle position VP detected by the vehicle position detector 22 when the working machine 1 actually travels. The planned travel route L may be created based on information input via an input interface.

The input interface includes, for example, a display 16 provided in or on the working machine 1 to receive input operation. The display 16 includes a display screen 16a to display a screen, and further includes a touchpad, a hardware switch, and/or the like. The input interface need only be configured to receive input of information and allow the controller 23 to acquire the input information, and the input interface may be an operable terminal, such as a smartphone, which is communicatively connected to the vehicle communicator 21. The input interface may be configured to create the planned travel route L and/or another processor may create the planned travel route L based on the input information received by the input interface.

The automatic-travel controller 23a is configured or programmed to, based on the vehicle position VP and/or the vehicle body orientation detected by the vehicle position detector 22 (i.e., at least one of the vehicle position VP or the vehicle body orientation) and based on the planned travel route L, automatically change the control valve 13 of the steering system 11, the speed stage of the transmission 5, the rotation speed of the prime mover 4, and/or the like.

For example, the automatic-travel controller 23a controls the steering angle such that the positional deviation of the vehicle position VP from the planned travel route L is below a threshold (such a control is "automatic-travel control"). That is, if the positional deviation of the vehicle position VP from the planned travel route L is below the threshold, the automatic-travel controller 23a controls the control valve 13 of the steering system 11 to maintain the steering angle. On the other hand, if the positional deviation of the vehicle position VP from the planned travel route L is greater than or equal to the threshold, the automatic-travel controller 23a controls the control valve 13 of the steering system 11 to change the steering angle such that the positional deviation decreases. Furthermore, the automatic-travel controller 23a changes the vehicle speed depending on, for example, whether the vehicle position VP is located on a straight section L1 or a turn section L2 of the planned travel route L. The automatic-travel controller 23a controls the travel speed such that the travel speed is lower when the vehicle position VP is on a turn section L2 than when the vehicle position VP is on a straight section L1.

Note that the above-mentioned automatic-travel control is merely an example, and the foregoing control does not imply any limitations.

Note also that although the description of example embodiments above discusses examples in which the controller 23 includes the automatic-travel controller 23a, the working machine 1 need only be configured to perform work based on the vehicle position VP detected by the vehicle position detector 22. For example, the controller 23 may include, in addition to or in place of the automatic-travel controller 23a, an automatic-steering controller (not shown) configured or programmed to control the steering angle of the vehicle body 3 such that the vehicle body 3 travels along the planned travel route L. The display 16 may be configured to, based on the vehicle position VP detected by the vehicle position detector 22 and based on an agricultural field map indicating the agricultural field H and stored in a storing device 53, display the current position of the working machine 1 on the agricultural field map.

The definer 23b is configured or programmed to, when the vehicle communicator 21 is to send a request for correction information to the assistance device 50, define information (request information) to be transmitted to the assistance device 50. The request information includes the position information of the vehicle position VP detected by the vehicle position detector 22. The position information of the vehicle position VP included in the request information is the position information detected by the vehicle position detector 22 using RTK. Note, however, that in a case where the vehicle position detector 22 is unable to perform RTK positioning (for example, in the case where the vehicle communicator 21 has not received correction information, such as when the working machine 1 has just been activated), the position information of the vehicle position VP included in the request information may be the position information detected by standalone positioning.

In the present embodiment, the request information includes, in addition to the position information of the vehicle position VP, identification information indicating the working machine 1, use information indicating work content, identification information indicating the vehicle position detector 22, and satellite signal(s) received by the vehicle position detector 22. The identification information indicating the working machine 1 is a unique character string to identify an individual working machine 1. The identification information indicating the vehicle position detector 22 is a unique character string to identify the type of the vehicle position detector 22. Such identification information are pre-stored, for example, in the vehicle storing device 24.

The use information indicates work content which is the content of work to be done by the working device 2 linked to the working machine 1. The definer 23b acquires the work content based on information input via the input interface and defines the use information. For example, the display 16 displays a predetermined work selection screen (not shown) on the display screen 16a to receive a selection input for one of options displayed on the work selection screen. The definer 23b acquires the information received by the display 16 through the selection input.

Note that the definer 23b may be configured or programmed to acquire the work content from somewhere other than the input interface. If the working device 2 is communicably connected to the controller 23 and the controller 23 is configured or programmed to determine the work content based on the identification information of the working device 2 and/or the like, the definer 23b may acquire the determined work content.

The aforementioned information included in the request information are examples, and the request information may include, for example, authentication information for use in authorizing the communication between the working machine 1 and the assistance device 50.

As illustrated in FIG. 1, each of the base stations 30 is installed at a predetermined reference point RP and receives satellite signal(s) from the positioning satellite(s) G. The base stations 30 are fixed base stations installed at predetermined reference points RP (absolute positions) by, for example, the Geospatial Information Authority of Japan, an agricultural machine manufacturer, an agricultural cooperative, a management company, or the like. The base stations 30 are installed in multiple locations at or around the agricultural field H and around the working machine 1 located in the agricultural field H. Each of the base stations 30 includes a station communicator 31, a station position detector 32, a station calculator 33, and a station storing device (memory and/or storage) 34.

The station communicator 31 is configured or programmed to transmit various data to an external device external to the base station 30 (for example, to the assistance device 50 or a management center 40 described later) and to receive data transmitted from an external device. The station communicator 31 performs wireless communication with external devices via, for example, Wi-Fi (registered trademark) based on IEEE 802.11, which is a communication standard, a mobile telephone communication network, a data communication network, and/or the like. In the present embodiment, the station communicator 31 transmits observation information (i.e., information based on satellite signal(s)) as data to the assistance device 50 via the management center 40.

Note that the station communicator 31 need only be configured to transmit the observation information to the assistance device 50, and may be configured or programmed to transmit the observation information directly to the assistance device 50 without using the management center 40.

The station position detector 32 is configured to receive satellite signals (such as the location(s) of the positioning satellite(s) G, the transmission time of the satellite signal(s) from the positioning satellite(s), and/or the like) transmitted from the positioning satellite(s) G. The station position detector 32 includes an antenna 32a to receive satellite signals.

The station calculator 33 includes, for example, electrical/electronic circuit(s), CPU(s), and/or program(s) stored in one or more memories and/or the like. The station calculator 33 is configured or programmed to perform various calculation operations relating to the base station 30. The station calculator 33 defines (calculates) the observation information that the station communicator 31 transmits. For example, the station calculator 33 defines the observation information by adding its identification information (such as a predetermined character string) to the satellite signals.

Note that the station calculator 33 may be configured or programmed to add its reference point RP (to be specific, position information of its reference point RP) to the satellite signals to define the observation information.

The station storing device 34 is a storage medium such as an SSD and/or an HDD and stores various information relating to the base station 30. For example, the station storing device 34 stores the identification information of a reference station, the position information of the reference point RP, and/or the like.

The management center 40 is a stationary terminal (server) such as a stationary computer external to the working machine 1. The management center 40 is installed, for example, at an agricultural machine manufacturer, an agricultural cooperative, a management company, or the like. The management center 40 includes a management-center communicator 41, a management-center calculator 42, and a management-center storing device (memory and/or storage) 43.

The management-center communicator 41 is configured or programmed to transmit various data to a device external to the management center 40 (for example, to the assistance device 50) and to receive data transmitted from an external device (for example, from the base stations 30). The management-center communicator 41 performs wireless communication with external devices via, for example, Wi-Fi (registered trademark) based on IEEE 802.11, which is a communication standard, a mobile telephone communication network, a data communication network, and/or the like. In the present embodiment, the management-center communicator 41 transmits, to the assistance device 50, the observation information received from the station communicator(s) 31 of one or more base stations 30.

The management-center calculator 42 includes, for example, electrical/electronic circuit(s), CPU(s), and/or program(s) stored in one or more memories and/or the like. The management-center calculator 42 is configured or programmed to perform various calculation operations relating to the management center 40.

The management-center storing device 43 is a storage medium such as an SSD and/or an HDD and stores various information relating to the management center 40. For example, the management-center storing device 43 may store a management table in which piece(s) of identification information of base station(s) 30 is/are associated with piece(s) of position information of the reference point(s) RP.

With this, the management-center calculator 42 may be configured or programmed to, in a case where the assistance device 50 does not store the position information of the reference points RP of the base stations 30 and where the observation information transmitted from a station communicator 31 does not include the position information of the reference point RP but has the identification information of the base station 30 added thereto, acquire the position information of the reference point RP based on the identification information and the management table stored in the management-center memory 43 and add the acquired position information of the reference point RP to the observation information. Note that in the present embodiment, the case where the assistance device 50 stores the position information of the reference point RP of each of the base stations 30 is described as an example.

The assistance device 50 is a stationary terminal (server) such as a stationary computer external to the working machine 1. The assistance device 50 is installed, for example, at an agricultural machine manufacturer, an agricultural cooperative, a management company, or the like. The assistance device 50 includes a communicator 51, a calculator 52, and a storing device (memory and/or storage) 53.

The communicator 51 is configured or programmed to transmit various data to a device external to the assistance device 50 (for example, to the working machine 1 and/or the management center 40) and to received data transmitted from an external device (for example, from the working machine 1 and/or the management center 40). The communicator 51 performs wireless communication with external devices via, for example, Wi-Fi (registered trademark) based on IEEE 802.11, which is a communication standard, a mobile telephone communication network, a data communication network, and/or the like. In the present embodiment, the communicator 51 receives the observation information from the management-center communicator(s) 41 and receives the request information from the vehicle communicator 21, for example. Furthermore, the communicator 51 transmits the correction information to the vehicle communicator 21.

Note that the communicator 51 need only be configured to receive the observation information transmitted from a plurality of (three or more) base stations 30, and the number of the management-center communicators 41 to perform wireless communication with the communicator 51 may be one or more.

The calculator 52 includes, for example, electrical/electronic circuit(s), CPU(s), and/or program(s) stored in one or more memories and/or the like. The calculator 52 is configured or programmed to perform various calculation operations relating to the assistance device 50.

The storing device 53 is a storage medium such as an SSD and/or an HDD and stores various information relating to the assistance device 50. For example, the storing device 53 stores pieces of identification information of respective base stations 30 in association with pieces of position information of the reference points RP of the base stations 30.

The assistance device 50 generates correction information (first correction information) for use in RRS-GNSS based on satellite signal(s) and a reference point RP, and generates correction information (second correction information including a virtual reference point VRP) for use in VRS-GNSS based on satellite signal(s) and reference points RP. As illustrated in FIG. 4, the assistance device 50 (calculator 52) includes a communication controller 52a, a request processor 52b, a converter 52c, a fourth monitor 52d, a first monitor 52e, a second monitor 52f, a fifth monitor 52g, a sixth monitor 52h, a third monitor 52i, a changer 52j, a selector 52k, a manager 521, a generator 52m, and a transmission controller 52n. The communication controller 52a, the request processor 52b, the converter 52c, the fourth monitor 52d, the first monitor 52e, the second monitor 52f, the fifth monitor 52g, the sixth monitor 52h, the third monitor 52i, the changer 52j, the selector 52k, the manager 521, the generator 52m, and the transmission controller 52n include software, specifically include electrical/electronic circuit(s), CPU(s), program(s) stored one or more memories, and/or the like in the calculator 52.

Note that, of the software of the calculator 52, the communication controller 52a, the converter 52c, the fourth monitor 52d, the fifth monitor 52g, the sixth monitor 52h, and the manager 521 are configured or programmed to always operate regardless of the request information transmitted from the vehicle communicator 21. On the other hand, the request processor 52b, the first monitor 52e, the second monitor 52f, the third monitor 52i, the changer 52j, the selector 52k, the generator 52m, and the transmission controller 52n are configured or programmed to operate in response to the request information that the communicator 51 receives from the vehicle communicator 21.

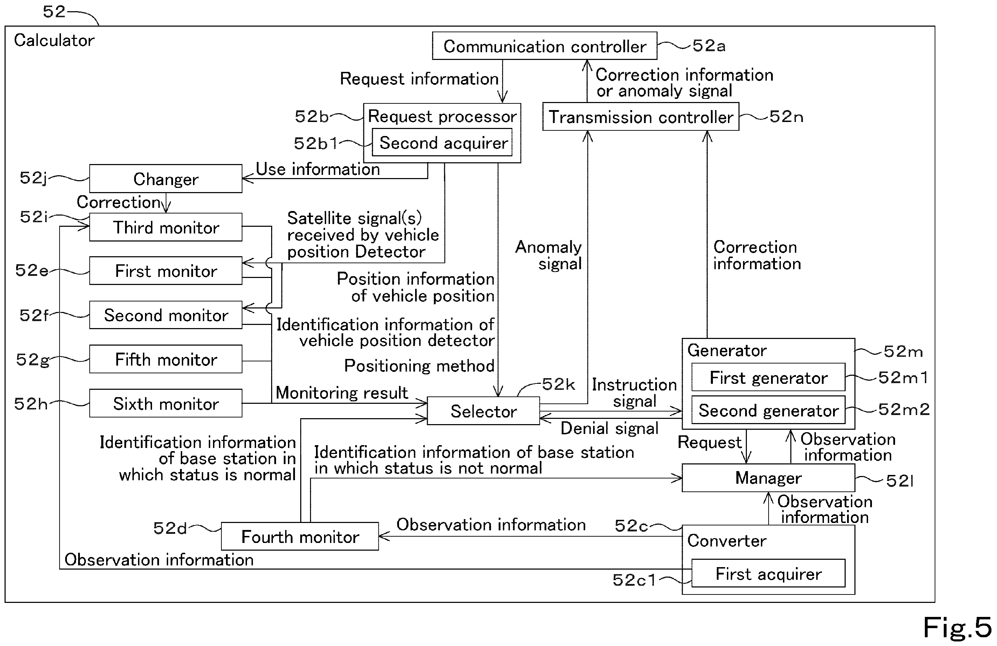

FIG. 5 illustrates a data flow in the calculator 52. The following description discusses the software of the calculator 52 in detail, with reference to FIGS. 4 and 5.

The communication controller 52a includes software to, for example, control the communicator 51 to cause the communicator 51 to receive information transmitted from the vehicle communicator 21, and control the communicator 51 to cause the communicator 51 to transmit information to the vehicle communicator 21. For example, the communication controller 52a controls the communicator 51 to cause the communicator 51 to receive the request information transmitted from the vehicle communicator 21. Furthermore, the communication controller 52a controls the communicator 51 based on data based on the request information (the data including the identification information indicating the working machine 1 and having been formatted by the later-described request processor 52b) to cause the communicator 51 to transmit the correction information to the vehicle communicator 21. The communication controller 52a causes the request information received by the communicator 51 to be output to the request processor 52b.

The request processor 52b acquires at least the position information of the vehicle position VP, the use information indicating work content, and the satellite signal(s) received by the vehicle position detector 22 included in the request information that the communication controller 52a caused the communicator 51 to receive, and to format (convert) these information into data that is easy for the assistance device 50 to process. In the present embodiment, the request processor 52b acquires the position information of the vehicle position VP, the identification information indicating the working machine 1, the use information indicating work content, the identification information indicating the vehicle position detector 22, and the satellite signal(s) received by the vehicle position detector 22 included in the request information, and to format these information into data that is easy for the assistance device 50 to process.

The request processor 52b outputs the formatted data including the satellite signal(s) received by the vehicle position detector 22 to the first monitor 52e and the second monitor 52f. Furthermore, the request processor 52b outputs the formatted data including the use information to the changer 52j, and outputs the formatted data including the position information of the vehicle position VP and identification information of the vehicle position detector 22 to the selector 52k.

Note that software included in the request processor 52b that acquires the use information and software included in the request processor 52b that acquires the identification information of the vehicle position detector 22 may be referred to as "second acquirer 52b1". In other words, the second acquirer 52b1 acquires the work content and the identification information of the vehicle position detector 22.

The converter 52c includes software to control the communicator 51 to cause the communicator 51 to receive information transmitted from the management-center communicator 41 and to format (convert) the received information into data easy for the assistance device 50 to process. For example, the converter 52c controls the communicator 51 to cause the communicator 51 to receive the observation information transmitted from the management-center communicator 41. Furthermore, the converter 52c acquires the observation information caused to be received by the communicator 51 and to format (convert) the observation information into data easy for the assistance device 50 to process. The converter 52c outputs the formatted data including the observation information to the fourth monitor 52d, the third monitor 52i, and the manager 521.

Note that software included in the converter 52c that acquires the observation information may be referred to as "first acquirer 52c1". In other words, the first acquirer 52c1 is configured or programmed to acquire the satellite signal(s) from the positioning satellite(s) G received by base stations 30.

The fourth monitor 52d includes software to monitor the status of the base stations 30. The fourth monitor 52d acquires the formatted data including the observation information from the converter 52c, and based on the observation information included in the data, determine whether the status of the base stations 30 is normal (where the base station 30 is operating normally) or abnormal (where an anomaly is occurring in the base station 30). For example, the fourth monitor 52d extracts, from the satellite signal(s) of the observation information, the transmission time at which the satellite signal(s) was/were transmitted from the positioning satellite(s) G, and to determine that an anomaly is occurring in the base station(s) 30 when the difference between the retrieved transmission time and the time at which the satellite signal(s) was/were received at the communicator 51 is equal to or greater than a predetermined time (e.g., 5 seconds). The fourth monitor 52d outputs the identification information of base station(s) 30 in which the status has been determined to be normal to the selector 52k and output the identification information of base station(s) 30 in which the status has been determined to be abnormal to the manager 521.

The first monitor 52e includes software to monitor the communication status between the vehicle position detector 22 and the positioning satellite(s) G. Specifically, the communication status between the vehicle position detector 22 and the positioning satellite(s) G monitored by the first monitor 52e includes the intensity of radio waves received by the vehicle position detector 22 from the positioning satellite(s) G. The first monitor 52e acquires the formatted data including the satellite signal(s) received by the vehicle position detector 22 from the request processor 52b and calculates the electric field strength of the satellite signal(s) included in the data.

The first monitor 52e determines that the communication status between the vehicle position detector 22 and the positioning satellite(s) G is good when the calculated electric field strength is greater than or equal to a predetermined value (second threshold) and determine that the communication status between the vehicle position detector 22 and the positioning satellite(s) G is bad when the electric field strength is below the second threshold. The second threshold is a predetermined value pre-stored in the storing device 53 and is, for example, 7 dBm. Note that the second threshold may be changed freely through an input interface communicably connected to the assistance device 50. The first monitor 52e outputs the monitoring result to the selector 52k.

The second monitor 52f includes software to monitor the communication status between the communicator 51 and the working machine 1. Specifically, the communication status between the communicator 51 and the working machine 1 monitored by the second monitor 52f includes the degree of delay in the communication between the communicator 51 and the working machine 1. For example, the second monitor 52f acquires the formatted data including satellite signal(s) from the request processor 52b, and extracts, from the satellite signal(s) included in the data, the transmission time at which the satellite signal(s) was/were transmitted from the positioning satellite(s) G. The degree of delay in the communication monitored by the second monitor 52f is the time difference between the extracted transmission time and the time at which the request information was transmitted from the vehicle communicator 21 to the communicator 51 (or the time at which the communicator 51 received the request information from the vehicle communicator 21). The second monitor 52f outputs the monitoring result to the selector 52k.

Note that the method of monitoring the communication status between the communicator 51 and the working machine 1 performed by the second monitor is not limited to the foregoing method. In addition to or in place of the aforementioned method, the second monitor may monitor time interval(s) at which the vehicle communicator 21 is transmitted to the communicator 51 (or time interval(s) at which the request information is transmitted from the vehicle communicator 21 to the communicator 51) and monitor the time interval(s) as the degree of delay in the communication. The second monitor 52f determines that the communication status between the communicator 51 and the working machine 1 is good when the degree of delay in the communication is below a third threshold set in advance (e.g. 5 seconds) and determine that the communication status between the communicator 51 and the working machine 1 is bad when the degree of delay in the communication is greater than or equal to the third threshold set in advance. The third threshold is a predetermined value pre-stored in the storing device 53 and may be changed freely through an input interface communicably connected to the assistance device 50.

The fifth monitor 52g includes software to monitor the status of other software included in the assistance system S. The fifth monitor 52g monitors whether other software is operating normally or not. For example, the fifth monitor 52g causes other software to periodically transmit a signal at predetermined time interval(s) (e.g., 3-second interval(s)). Accordingly, the fifth monitor 52g determines that other software is operating normally if the software sends signals at predetermined time interval(s). On the other hand, the fifth monitor 52g determines that an anomaly is occurring in software if the software does not send a signal even after the passage of the predetermined time interval. The fifth monitor 52g outputs the monitoring result to the selector 52k.

Note that the monitoring method that the fifth monitor 52g performs to monitor the status of other software is not limited to the foregoing method. For example, the fifth monitor 52g may send a signal to other software, and if a signal sent by the other software in response to the received signal matches a predetermined signal, determine that the other software is operating normally, and if the signal sent by the other software does not match the predetermined signal, determine that an anomaly is occurring.

The sixth monitor 52h includes software to monitor the status of hardware (such as the CPU and memory of the calculator 52, the storing device 53, the communicator 51, and/or the like) included in the assistance device 50. The sixth monitor 52h monitors whether the hardware is operating normally or not. For example, the sixth monitor 52h determines whether each piece of hardware is operating normally or not based on the CPU load (CPU utilization) and CPU temperature of the calculator 52, the communication speed between the calculator 52 and the storing device 53, the communication speed of the communicator 51, and/or the like.

In the present embodiment, the sixth monitor 52h determines whether the calculator 52 is operating normally or not based on whether the CPU load of the calculator 52 is below a predetermined value or not, whether the CPU temperature is below a predetermined value or not, and/or the like. Furthermore, the sixth monitor 52h determines whether the communicator 51 is operating normally based on the communication speed of the communicator 51. The sixth monitor 52h outputs the monitoring result to the selector 52k.

Note that the sixth monitor 52h may determine whether hardware is operating normally using a different method, in addition to or in place of the aforementioned method. For example, the sixth monitor 52h may estimate that the communication speed of the communicator 51 is low if the communicator 51 is partially broken, and determine that the communicator 51 is not operating normally.

The third monitor 52i monitors the positioning accuracy which is the accuracy of position detection based on the second correction information (i.e., VRS-GNSS positioning). The third monitor 52i determines whether the positioning accuracy is lower than a predetermined criterion value or not. The positioning accuracy may be defined in various ways, provided that the positioning accuracy is the accuracy of position detection in VRS-GNSS positioning. The criterion value may also be defined depending on the way in which the positioning accuracy is defined.

The third monitor 52i calculates, using the second correction information, the position of another base station 30 (reference base station 30A) which is different from three or more of the base stations 30, and monitors the positioning accuracy (first detection accuracy) based on the positional deviation PD of the calculated position CP of the reference base station 30A from the reference point RP of the reference base station 30A (see FIG. 1). In the present embodiment, the third monitor 52i acquires the formatted data including the observation information from the converter 52c, and acquires the observation information (satellite signal(s) received by the three base stations 30 around the reference base station 30A) included in the data. Furthermore, the third monitor 52i, using a location in the vicinity of the reference base station 30A as the virtual reference point VRP and based on the satellite signal(s) and the reference points RP of the three base stations 30, determines the position of the reference base station 30A by VRS-GNSS positioning and calculates the positional deviation PD.

In the above case, the smaller the positional deviation PD, the higher the positioning accuracy of VRS-GNSS. The larger the positional deviation PD, the lower the positioning accuracy of VRS-GNSS. The third monitor 52i determines that the first detection accuracy is greater than or equal to the criterion value when the positional deviation PD is below a predetermined first reference value. On the other hand, the third monitor 52i determines that the first detection accuracy is lower than the criterion value when the positional deviation PD is greater than or equal to the first reference value. That is, the criterion value for the first detection accuracy is defined by the first reference value, which is an absolute value.

The first reference value is defined by a preset distance (for example, 3 cm). The first detection accuracy is associated with the three base stations 30 used in VRS-GNSS positioning. The storing device 53 stores the combination(s) of the first detection accuracy and the identification information of each of the three base stations 30 corresponding to the first detection accuracy, and retains the latest first detection accuracy for each of the combinations of the three base stations 30.

The third monitor 52i may monitor a positioning accuracy (second detection accuracy) based on the number of positioning satellites G from which the vehicle position detector 22 and the station position detectors 32 can receive satellite signals. The second detection accuracy is defined by the absolute value of the difference between (i) the number of positioning satellites G from which the vehicle position detector(s) 22 of the working machine 1 and/or of another working machine 1A different from the working machine 1 can receive satellite signals, and (ii) the number of positioning satellites G from which the station position detector(s) 32 of the base station(s) 30 in the vicinity of the working machine 1 can receive satellite signals.

In the above case, the smaller the absolute value of the difference between the number of positioning satellites G from which the vehicle position detector(s) 22 can receive satellite signals and the number of positioning satellites G from which the station position detector(s) 32 can receive satellite signals, the higher the positioning accuracy of VRS-GNSS. The larger the absolute value of the difference in the number of positioning satellites G, the lower the positioning accuracy of VRS-GNSS. The third monitor 52i determines that the second detection accuracy is greater than or equal to a criterion value when the absolute value of the difference in the number of positioning satellites G is less than a predetermined second reference value. On the other hand, the third monitor 52i determines that the second detection accuracy is lower than the criterion value when the absolute value of the difference in the number of positioning satellites G is greater than or equal to the second reference value. That is, the criterion value for the second detection accuracy is defined by the second reference value.

The second reference value is defined by the number of positioning satellites G (for example, fifteen). The second detection accuracy is associated with the identification information of the base station(s) 30 corresponding to the second detection accuracy. The storing device 53 stores the combination(s) of the second detection accuracy and the identification information of the base station(s) 30 corresponding to the second detection accuracy, and retains the latest second detection accuracy for each of the base stations 30.

The third monitor 52i may monitor a positioning accuracy (third detection accuracy) based on an evaluation value which represents the accuracy of detecting the vehicle position VP by VRS-GNSS positioning. The evaluation value represents the accuracy obtained when another working machine 1A, different from the working machine 1, detected its vehicle position VP by VRS-GNSS positioning. In such a case, an operator who performs work using the another working machine 1A operates an input interface and/or the like to evaluate, in the form of a value, the positioning accuracy of VRS-GNSS using base stations 30 (three base stations 30 in the present embodiment), and the value of the evaluation result is associated with the three base stations 30.

In the above case, the higher the evaluation value, the higher the positioning accuracy of VRS-GNSS. The lower the evaluation value, the lower the positioning accuracy of VRS-GNSS. The third monitor 52i determines that the third detection accuracy is greater than or equal to a criterion value when the evaluation value is greater than or equal to a predetermined third reference value. On the other hand, the third monitor 52i determines that the third detection accuracy is lower than the criterion value when the evaluation value is below the third reference value. In the present embodiment, the evaluation value is defined on a 10-point scale (1 to 10). That is, the criterion value for the third detection accuracy is defined by the third reference value.

The third reference value is defined by one of the ten numerical values of the scale (for example, 7). The result of the operator evaluation (evaluation value) is associated with the three or more of the base stations 30 used in the VRS-GNSS positioning. The storing device 53 stores the combination(s) of the third detection accuracy and the identification information of each of the three base stations 30 corresponding to the third detection accuracy, and retains the latest third detection accuracy for each of the combinations of the three base stations 30.

The third monitor 52i may monitor a positioning accuracy (fourth detection accuracy) based on the communication status between another working machine 1A different from the working machine 1 and the communicator 51. In such a case, the third monitor 52i acquires the degree of delay in the communication between the communicator 51 and the another working machine 1A monitored by the second monitor 52f, and monitors the degree of delay.

In the above case, the lower the degree of delay, the higher the positioning accuracy of VRS-GNSS. The higher the degree of delay, the lower the positioning accuracy of VRS-GNSS. The third monitor 52i determines that the fourth detection accuracy is greater than or equal to a criterion value when the degree of delay is below a predetermined fourth reference value. On the other hand, the third monitor 52i determines that the fourth detection accuracy is below the criterion value when the degree of delay is greater than or equal to the fourth reference value. That is, the criterion value for the fourth detection accuracy is defined by the fourth reference value.

The fourth reference value is defined by the amount of data delay, and is, for example, 3 ms. The fourth detection accuracy is associated with the position of the another working machine 1A. The storing device 53 stores the combination(s) of the fourth detection accuracy and the vehicle position VP of the another working machine 1A corresponding to the fourth detection accuracy, and retains the latest fourth detection accuracy for each of the positions.

The third monitor 52i outputs the monitoring result(s) (at least one of the first to fourth detection accuracies) to the selector 52k.

The changer 52j modifies, based on the work content of the working device 2 acquired by the second acquirer 52b1, the criterion value(s) (first to fourth reference value(s)) to be compared to the foregoing first to fourth detection accuracy(accuracies) to evaluate the level of positioning accuracy. The changer 52j acquires the formatted data including the use information from the request processor 52b and refers to the work content from the use information included in the data.

The changer 52j increases the criterion value when the work content requires relatively high positioning accuracy, that is, requires high detection accuracy of the vehicle position VP. On the other hand, the changer 52j reduces the criterion value when the work content does not require relatively high positioning accuracy, that is, when work efficiency can be prioritized over increasing the detection accuracy of the vehicle position V.

In the present embodiment, the changer 52j, when the work content requires relatively high positioning accuracy, reduces the first reference value and reduce the second reference value compared to when the work content does not require relatively high positioning accuracy. Furthermore, the changer 52j, when the work content requires relatively high positioning accuracy, increases the third reference value and reduces the fourth reference value compared to when the work content does not require relatively high positioning accuracy.

In the present embodiment, the changer 52j multiplies each of the first to fourth reference values by a correction value corresponding to the work content to modify the first to fourth reference values. The storing device 53 stores a correction table showing the relationship between the work content and the correction values by which the respective first to fourth reference values are multiplied.

For example, seeding work that the seeder performs requires higher positioning accuracy than tillage work that the tiller performs, fertilizing work that the fertilizer spreader performs, and stubble cultivation work that the stubble cultivator performs. Furthermore, the tillage work does not require higher positioning accuracy than the seeding work, and requires higher positioning accuracy than the fertilizing work and the stubble cultivation work. The fertilizing work and the stubble cultivation work do not require higher positioning accuracy than the seeding work and the cultivation work.

Therefore, in the present embodiment, among the correction values corresponding to the seeding work, the correction value by which the first reference value, the second reference value, and the fourth reference value are each multiplied is 0.7 and the correction value by which the third reference value is multiplied is 1.3. The correction values corresponding to the cultivation work are 0. Furthermore, among the correction values corresponding to the fertilizing work and the stubble cultivation work, the correction value by which the first reference value, the second reference value, and the fourth reference value are each multiplied is 1.3 and the correction value by which the third reference value is multiplied is 0.7.

Note that the above-mentioned correction values corresponding to the above types of work content are merely examples, and do not imply any limitation. The corrections values may be changed freely. For example, the correction values may be changed freely through an input interface communicably connected to the assistance device 50.

The changer 52j need only increase the criterion value when the work content requires relatively high positioning accuracy and reduce the criterion value when the work content does not require relatively high positioning accuracy, and the method of performing the modification is not limited to the above. For example, the changer 52j may modify the first to fourth reference values by adding or subtracting a predetermined correction value to or from the first to fourth reference values.

The selector 52k (correction information selection processor) includes software to select a piece of correction information of one or more pieces of first correction information and one or more pieces of second correction information to be generated by the generator 52m. The selector 52k selects a piece of first correction information or a piece of second correction information based on multiple conditions. In other words, the selector 52k selects, based on multiple conditions, whether to cause the vehicle position detector 22 to perform positioning using RRS-GNSS or to perform positioning using VRS-GNSS, and selects base station(s) 30 for receiving satellite signal(s) for use in generating the correction information.

The selector 52k, upon selecting the first correction information or the second correction information, outputs an instruction signal to the generator 52m to cause the generator 52m to request the manager 521 for information necessary to generate the correction information (for example, request for observation information). The instruction signal includes the identification information of base station(s) 30 to identify the observation information. The generator 52m requests the manager 521 for the observation information based on the instruction signal.

In the present embodiment, the selector 52k selects, from one or more pieces of first correction information and one or more pieces of second correction information, a piece of first correction information or a piece of second correction information based on the positional relationship between the working machine 1 and an area E defined by a polygon connecting corresponding reference points RP of three or more base stations 30. The selector 52k, when the working machine 1 is located outside the area E, preferentially selects a piece of first correction information based on the base station 30 closest to the working machine 1, over other correction information (first condition).

The selector 52k acquires the formatted data including the position information of the vehicle position VP from the request processor 52b, and refer to the reference point RP of each of the base stations 30 and its position information stored in the storing device 53. The selector 52k, based on the position information of the vehicle position VP and the position information of the reference points RP, selects, as the base stations 30 for use in positioning using VRS-GNSS, three or more base stations 30 close to the working machine 1. Specifically, the selector 52k, based on the position information of the vehicle position VP and the position information of the reference points RP, selects three or more of the base stations 30 located around the working machine 1 that include the base station(s) 30 closest to the working machine 1 and that increase in horizontal distance from the working machine 1.

In the present embodiment, the selector 52k selects three base stations 30. In such a case, the selector 52k acquires the monitoring result output from the fourth monitor 52d and selects three base stations 30 from base stations 30 in which the status is normal, of a plurality of base stations 30. That is, the selector 52k selects three base stations 30 in which the status has been determined by the fourth monitor 52d to be normal and not select base station(s) 30 in which the status has been determined by the fourth monitor 52d to be abnormal.

As illustrated in FIG. 1, the selector 52k generates the area E defined by a polygon connecting the corresponding reference points RP of the selected three base stations 30, and determines whether or not the vehicle position VP is located outside the area E. To be specific, the selector 52k, when the vehicle position VP is located on the outline defining the area E, determines that the working machine 1 is located inside the area E. Note that the selector 52k may determine that the working machine 1 is located outside the area E when the vehicle position VP is located on the outline defining the area E.

In performing the positioning using VRS-GNSS when the working machine 1 is located outside the area E, the second correction information is generated through estimation by extrapolation instead of interpolation, and this may prevent maintaining positioning accuracy. However, with the aforementioned configuration, since the selector 52k preferentially selects the first correction information, RRS-GNSS positioning is used complementary in place of the VRS-GNSS positioning, allowing the working machine 1 to perform position detection with relatively high accuracy.

The selector 52k may selects a piece of first correction information or a piece of second correction information based on other condition(s) in addition to the first condition. For example, as illustrated in FIG. 1, the selector 52k may calculate a relative distance RD between the working machine 1 and one of the reference points RP of the three base stations 30 that is closest to the working machine 1, and, when the relative distance RD is greater than or equal to a first threshold, preferentially select a piece of first correction information that is based on at least one satellite signal received by the base station 30 that is closest to the working machine 1, over other correction information (second condition).

The first threshold is pre-stored in the storing device 53 and, for example, 10 km. Note that the first threshold is not limited to 10 km and may be changed freely through an input interface communicably connected to the assistance device 50.

The selector 52k, based on the position information of the vehicle position VP acquired from the formatted data including the position information of the vehicle position VP and based on the position information of the reference points RP of the three or more base stations 30 selected as the base stations 30 for use in positioning using VRS-GNSS, calculates the relative distance RD between the working machine 1 and the reference point RP of the base station 30 closest to the working machine 1. The selector 52k determines whether the calculated relative distance RD is greater than or equal to the first threshold, that is, whether or not the second condition is satisfied.

When the relative distance RD between the working machine 1 and one of the reference points RP of the three base stations 30 that is closest to the working machine 1 is greater than or equal to a predetermined distance, in other words, when the area E is relatively large, there may be cases in which the positioning accuracy cannot be maintained in the position detection using the second correction information. However, with the aforementioned configuration, since the selector 52k preferentially selects the first correction information, RRS-GNSS positioning is used complementary in place of the VRS-GNSS positioning, allowing the working machine 1 to perform position detection with relatively high accuracy.

The selector 52k may, when the communication status between the vehicle position detector 22 and the positioning satellite(s) G is bad, preferentially select a piece of first correction information which is based on the satellite signal(s) received by the base station 30 closest to the working machine 1, over other correction information (third condition). The selector 52k refers to the monitoring result output from the first monitor 52e and determines whether the intensity of radio waves is below the second threshold and indicates that the communication status between the vehicle position detector 22 and the positioning satellite G is bad, that is, determines whether or not the third condition is satisfied.

When the communication status between the position detector and positioning satellite(s) G is bad, the positioning of the working machine 1 may be significantly deteriorated and the accuracy of VRS-GNSS positioning may also decrease. However, with the aforementioned configuration, since the selector 52k preferentially selects the first correction information, RRS-GNSS positioning is used complementary in place of VRS-GNSS positioning, allowing the working machine 1 to perform position detection with relatively high accuracy.

The selector 52k may, when the communication status between the communicator 51 and the working machine 1 (vehicle communicator 21) is bad, preferentially select a piece of first correction information which is based on the satellite signal(s) received by the base station 30 closest to the working machine 1, over other correction information (fourth condition). The selector 52k refers to the monitoring result output from the second monitor 52f and determines whether the degree of delay is greater than or equal to the third threshold and indicates that the communication status between the communicator 51 and the vehicle communicator 21 is bad, that is, determine whether or not the fourth condition is satisfied.

When the communication status between the communicator 51 and the working machine 1 is bad, delay may occur in the transmission of the second correction information from the communicator 51 to the working machine 1 and/or in bringing the selection made by the selector 52k between VRS-GNSS and RRS-GNSS into effect. However, with the aforementioned configuration, since the selector 52k preferentially selects the first correction information, RRS-GNSS positioning is used complementary in place of VRS-GNSS positioning, allowing the working machine 1 to perform position detection with relatively high accuracy.

The selector 52k may, when the positioning accuracy is below a criterion value, preferentially select a piece of first correction information which is based on the satellite signal(s) received by the base station 30 closest to the working machine 1, over other correction information (fifth condition). The selector 52k refers to the monitoring result (first to fourth detection accuracies) from the third monitor 52i and determines whether at least one of the referenced first to fourth detection accuracies is below a criterion value, that is, determines whether or not the fifth condition is satisfied.

For example, the selector 52k, based on the identification information of each of the selected three base stations 30, refers to the first detection accuracies that correspond to the three base stations 30, among the positioning accuracies (first detection accuracies) stored in the storing device 53. The selector 52k, based on the identification information of each of the selected three base stations 30, refers to the second detection accuracies that correspond to the three base stations 30, among the positioning accuracies (second detection accuracies) stored in the storing device 53. The selector 52k, based on the identification information of each of the selected three base stations 30, refers to the third detection accuracies that correspond to the selected three base stations 30, among the positioning accuracies (third detection accuracies) stored in the storing device 53. The selector 52k then, based on the position information of the vehicle position(s) VP acquired from the formatted data including the position information of the vehicle position(s) VP, refers to the fourth detection accuracy that corresponds to the vehicle position VP of another working machine 1A closest to the vehicle position VP, among the positioning accuracies (fourth detection accuracies) stored in the storing device 53.

With this, the selector 52k can more appropriately select RRS-GNSS or VRS-GNSS based on the positioning accuracies of VRS-GNSS.

The selector 52k may, when the status of a first generator 52m1 of the generator 52m that includes software to generate first correction information is normal and the status of a second generator 52m2 of the generator 52m that includes software to generate second correction information is abnormal, preferentially select a piece of first correction information which is based on the satellite signal(s) received by the base station 30 closest to the working machine 1, over other correction information (sixth condition). The selector 52k refers to the monitoring result output from the fifth monitor 52g and determines whether the first generator 52m1 is in the normal status and also whether the second generator 52m2 is in the abnormal status, that is, determines whether or not the sixth condition is satisfied.

This can eliminate or reduce the likelihood that the working machine 1 will detect the vehicle position VP based on the inaccurate second correction information resulting from the abnormal status of the second generator 52m2.

The selector 52k may, when the vehicle position detector 22 is unsuitable for the position detection using the second correction information, preferentially select a piece of first correction information which is based on the satellite signal(s) received by the base station 30 closest to the working machine 1, over other correction information (seventh condition). The storing device 53 stores a first suitability table including the identification information indicating the vehicle position detector(s) 22 and whether or not the vehicle position detector(s) 22 is capable of performing positioning using VRS-GNSS. The selector 52k acquires the formatted data including the identification information of the vehicle position detector 22 from the request processor 52b. The selector 52k, based on the identification information indicating the vehicle position detector 22 included in the data, refers to the first suitability table stored in the storing device 53 and determines whether the vehicle position detector 22 is capable of performing positioning using VRS-GNSS, that is, whether or not the seventh condition is satisfied.

This can prevent or reduce an increase in the processing load on the calculator 52, which would occur when the second generator 52m2 unnecessarily generates the second correction information to be transmitted to the working machine 1 that cannot perform positioning using VRS-GNSS.

Note that the conditions based on which the selector 52k selects a piece of first correction information or a piece of second correction information is not limited to the above-mentioned conditions. The selector 52k may, for example, when at least RRS-GNSS is selected based on the manually selected positioning method (RRS-GNSS or VRS-GNSS) by an operator (eighth condition), preferentially select a piece of first correction information which is based on the satellite signal(s) received by the base station 30 closest to the working machine 1, over other correction information (eighth condition). In such a case, the input interface (display 16) of the working machine 1 displays a predetermined system selection screen (not shown) on the display screen 16a. The system selection screen includes icon(s) (selecting member(s), not shown) to receive selection operation and the display 16 accepts the selection of positioning method(s) based on the selection operation performed on the icon. The positioning method received by the input interface is defined, by the definer 23b, as information included in the request information.

In the present embodiment, the second acquirer 52b1 acquires, in addition to the work content and the identification information of the vehicle position detector 22, the positioning method selected via the input interface. The selector 52k determines whether the second acquirer 52b1 has acquired RRS-GNSS as the positioning method, that is, determines whether or not the eighth condition is satisfied.

In the foregoing embodiment, the selector 52k, when one or more of the first to eighth conditions are satisfied, preferentially selects a piece of first correction information which is based on the satellite signal(s) received by the base station 30 closest to the working machine 1, over other correction information. On the other hand, it can be said that the selector 52k, when none of the first to eighth condition are satisfied, preferentially selects a piece of second correction information that is based on the satellite signal(s) received by the three base stations 30 closest to the working machine 1 over other correction information.

This makes it possible to appropriately select the position detection using first correction information that is based on the reference point RP of a base station 30 (i.e., RRS-GNSS) or the position detection using second correction information that is based on the virtual reference point VRP (i.e., VRS-GNSS). Thus, the working machine 1 can perform position detection with relatively high accuracy.

It should be noted, however, that the selector 52k need only preferentially select a piece of first correction information which is based on the satellite signal(s) received by the base station 30 closest to the working machine 1 over other correction information when one or more of the first to eighth conditions are satisfied, and preferentially select a piece of second correction information based on the satellite signal(s) received by the three base stations 30 closest to the working machine 1 over other correction information when none of the first to eighth condition are satisfied. The calculator 52 may, if a predetermined condition is satisfied, perform predefined anomaly processing without selecting either the first or second correction information.

For example, the selector 52k, if software included in the assistance device 50 is not operating normally (ninth condition) or hardware included in the assistance device 50 is not operating normally (tenth condition), selects neither the first correction information nor the second correction information, and the calculator 52 performs the anomaly processing. Specifically, the selector 52k refers to the monitoring results from the fifth monitor 52g and the sixth monitor 52h and determines whether the ninth condition or the tenth condition is satisfied.

The selector 52k, when the ninth condition or the tenth condition is satisfied and neither first correction information nor second correction information is to be selected, outputs, to the communication controller 52a, an anomaly signal indicating an instruction to perform the anomaly processing. The communication controller 52a, upon receiving the anomaly signal from the selector 52k, controls the communicator 51 based on the anomaly signal to perform the anomaly processing including disconnecting from and reconnecting to the vehicle communicator 21. With this, when the vehicle communicator 21 is connected again to the communicator 51 and the request information is transmitted from the vehicle communicator 21 to the communicator 51, the selector 52k reselects first correction information or second correction information.

With this, it is possible to eliminate or reduce the likelihood that the working machine 1 will detect the vehicle position VP based on inaccurate correction information resulting from the assistance device 50 not operating normally.

Note that the above-mentioned anomaly processing is merely an example. For example, the communication controller 52a may, upon receiving the anomaly signal from the selector 52k, control the communicator 51 based on the anomaly signal to transmit an error signal to the vehicle communicator 21. In such a case, when the vehicle communicator 21 receives the error signal from the communicator 51, the display 16 displays, on the display screen 16a, based on the error signal, an indication that RRS-GNSS or VRS-GNSS positioning cannot be performed.

The selector 52k may, if one or more of the first to eighth conditions are satisfied and the first generator 52m1 is in the abnormal status, select neither first correction information nor second correction information, and the calculator 52 may perform the anomaly processing (eleventh condition). Specifically, the selector 52k refers to the monitoring result output from the fifth monitor 52g and determines whether the eleventh condition is satisfied. The selector 52k, when the eleventh condition is satisfied and neither the first correction information nor the second correction information is to be selected, outputs, to the communication controller 52a, an anomaly signal indicating an instruction to perform the anomaly processing.

With this configuration, it is possible to eliminate or reduce the likelihood that the working machine 1 will detect the vehicle position VP based on inaccurate first correction information resulting from the abnormal status of the first generator 52m1.

In the foregoing embodiment, cases in which the vehicle position detector 22 is configured to perform positioning using at least RRS-GNSS have been described as an example. When also taking into consideration the working machine 1 including the vehicle position detector 22 configured to perform neither positioning using VRS-GNSS nor positioning using RRS-GNSS, the calculator 52 may be configured or programmed to perform the anomaly processing when the selector 52k determines that the seventh condition and a twelfth condition (that the vehicle position detector 22 is unsuitable for the position detection using first correction information) are both satisfied. In such a case, the storing device 53 stores a second suitability table including the identification information indicating the vehicle position detector(s) 22 and whether or not the vehicle position detector(s) 22 is capable of performing positioning using RRS-GNSS.

The selector 52k, based on the identification information indicating the vehicle position detector 22 included in the request information, refers to the second suitability table stored in the storing device 53 and determines whether the vehicle position detector 22 is capable of performing positioning using RRS-GNSS.

The manager 521 includes software to manage satellite signal(s) acquired by the first acquirer 52c1 and output the satellite signal(s) to the generator 52m. The manager 521 acquires the formatted data including the observation information from the converter 52c. The manager 521 is configured or programmed to, of the acquired observation information (i.e., satellite signal(s) acquired by base station(s) 30), output, to the generator 52m, satellite signal(s) received by base station(s) 30 in the normal status (i.e., in which the status is normal) and not to output, to the generator 52m, satellite signal(s) received by base station(s) 30 in the abnormal status (i.e., in which the status is abnormal). Specifically, the manager 521, when the monitoring result is output from the fourth monitor 52d, determines, based on the identification information of the base station(s) 30 included in the instruction signal and based on the monitoring result, whether the status of the base station(s) 30 that corresponds to the first correction information or the second correction information selected by the selector 52k is normal or abnormal.

The first acquirer 52c1, upon determining that the status of the base station(s) 30 that corresponds to the first correction information or the second correction information selected by the selector 52k is normal, outputs, to the generator 52m, the satellite signal(s) received by the base station(s) 30 in the normal status. In contrast, the manager 521, upon determining that the status of the base station(s) 30 that corresponds to the first correction information or the second correction information selected by the selector 52k is abnormal, does not output, to the generator 52m, the satellite signal(s) received by the base station(s) 30 in the abnormal status. Note that the manager 521 may output, to the generator 52m, a denial signal indicating that the status of the base station 30 is abnormal instead of not outputting satellite signals.

That is, the fourth monitor 52d outputs the monitoring result to both the selector 52k and the manager 521, the selector 52k acquires the monitoring result and selects, as the three base stations 30, the base stations 30 in the normal status, and the manager 521 acquires the monitoring result and outputs, to the generator 52m, only the satellite signals received by the base stations 30 in the normal status. Thus, since the assistance device 50 filters out the base stations 30 in the abnormal status multiple times at different points in time, it is possible to more reliably eliminate or reduce the likelihood that the working machine 1 will perform positioning using RRS-GNSS or VRS-GNSS based on the satellite signals received by the base stations 30 in the abnormal status.

The generator 52m includes software to generate correction information (first correction information and second correction information). The generator 52m, based on the instruction signal output from the selector 52k, requests the manager 521 for observation information (satellite signal(s)). Upon receiving the observation information from the manager 521, the generator 52m generates the correction information based on the satellite signal(s) and/or the like included in the observation information.

Specifically, the first generator 52m1 of the generator 52m that generates first correction information for use in RRS-GNSS generates the first correction information based on satellite signal(s) acquired by the first acquirer 52c1 and based on the reference point RP of the base station 30 having been received the satellite signal(s). Furthermore, the second generator 52m2 of the generator 52m that generates second correction information for use in VRS-GNSS generates the second correction information including the virtual reference point VRP based on satellite signals received by three or more of a plurality of base stations 30 and based on the reference points RP of the three or more base stations 30.

Note that, the generator 52m outputs a denial signal to the selector 52k when, although the generator 52m has requested the manager 521 for the observation information (satellite signal(s)), the status of the base station(s) 30 to receive the satellite signal(s) is abnormal and the generator 52m has acquired a denial signal from the manager 521 instead of the satellite signal(s). The selector 52k, upon acquiring the denial signal output from the generator 52m, outputs an anomaly signal to the communication controller 52a. With this, when the request information is transmitted from the vehicle communicator 21 to the communicator 51, the selector 52k reselects three base stations 30 close to the working machine 1 and performs selection between the first correction information and the second correction information.

The transmission controller 52n performs control such that the first correction information or the second correction information generated by the generator 52m is transmitted from the communicator 51. Specifically, the transmission controller 52n controls the time interval(s) at which the first correction information and the second correction information is transmitted. For example, the transmission controller 52n outputs the first correction information or the second correction information, acquired from the generator 52m, to the communication controller 52a at predetermined time interval(s). The communication controller 52a acquires the first correction information or the second correction information output by the transmission controller 52n. The communication controller 52a controls the communicator 51 to cause the communicator 51 to transmit the first correction information or the second correction information to the vehicle communicator 21 at the predetermined time interval(s).

With this, when the vehicle communicator 21 receives the first correction information from the communicator 51, the vehicle position detector 22 performs positioning using RRS-GNSS based on satellite signal(s) received by the antenna 22a and the first correction information received by the vehicle communicator 21. In contrast, when the vehicle communicator 21 receives the second correction information from the communicator 51, the vehicle position detector 22 performs positioning using VRS-GNSS based on satellite signal(s) received by the antenna 22a and the second correction information received by the vehicle communicator 21.

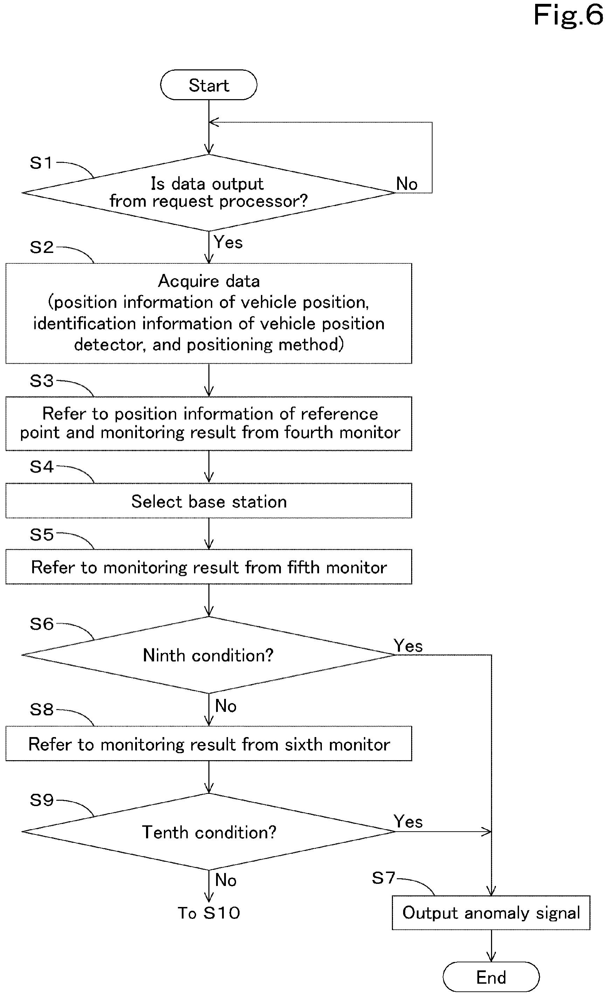

The following describes the flow of steps, included in the assistance method for the working machine 1 in the present embodiment, which are performed by the selector 52k, the generator 52m, the transmission controller 52n, and the communication controller 52a, with reference to FIGS. 6 to 9. FIGS. 6 to 9 are flowcharts of steps performed by the selector 52k, the generator 52m, the transmission controller 52n, and the communication controller 52a. The series of steps illustrated in FIGS. 6 to 9 is executed by CPU(s) based on software program(s) pre-stored in the memory of the calculator 52.

As illustrated in FIG. 6, the selector 52k determines whether the formatted data is output from the request processor 52b (S1). Upon determining that the formatted data is output from the request processor 52b (YES at S1), the selector 52k acquires the formatted data from the request processor 52b (S2), and refers to the position information of the reference points RP of base stations 30 stored in the storing device 53 and the monitoring result output from the fourth monitor 52d (S3). The selector 52k acquires the position information of the vehicle position VP included in the acquired formatted data, the referenced position information of the reference points RP of the base stations 30, and the referenced monitoring result from the fourth monitor 52d, and selects, among the base stations 30, three base stations 30 close to the working machine 1 from base stations 30 in the normal status (S4).

Next, the selector 52k refers to the monitoring result output from the fifth monitor 52g (S5). Based on the referenced monitoring result from the fifth monitor 52g, the selector 52k determines whether or not the ninth condition is satisfied (S6). Upon determining that software included in the assistance device 50 is not operating normally and that the ninth condition is satisfied (YES at S6), the selector 52k outputs, to the communication controller 52a, an anomaly signal indicating an instruction to perform anomaly processing (S7).

Upon determining that software included in the assistance device 50 is operating normally and the ninth condition is not satisfied (NO at S6), the selector 52k refers to the monitoring result output from the sixth monitor 52h (S8). Based on the referenced monitoring result from the sixth monitor 52h, the selector 52k determines whether or not the tenth condition is satisfied (S9). Upon determining that hardware included in the assistance device 50 is not operating normally and the tenth condition is satisfied (YES at S9), the selector 52k proceeds to step S7.

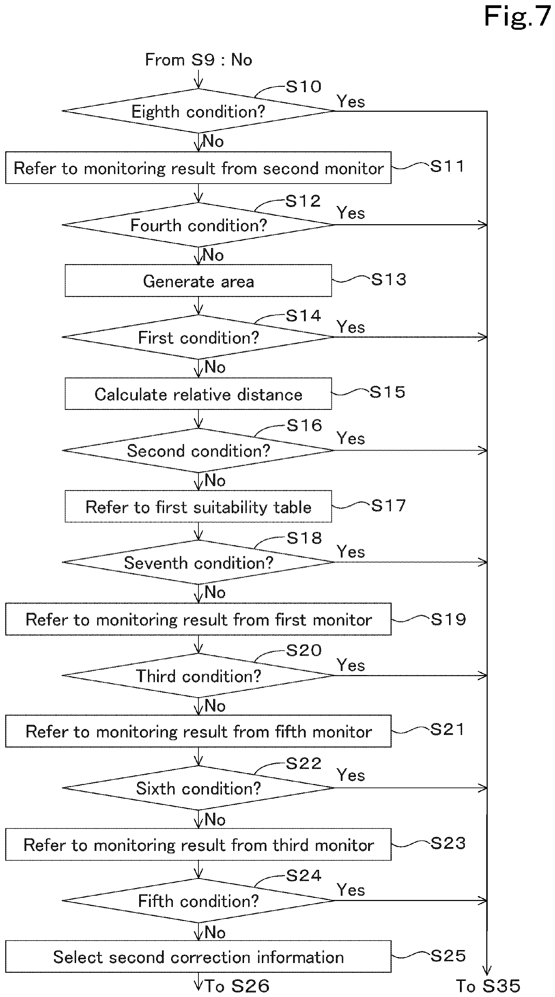

Upon determining that hardware included in the assistance device 50 is operating normally and the tenth condition is not satisfied (NO at S9), as illustrated in FIG. 7, the selector 52k determines whether or not the eighth condition is satisfied based on the positioning method included in the formatted data acquired at step S2 (S10).

Upon determining that the second acquirer 52b1 has acquired VRS-GNSS as the positioning method and that the eighth condition is not satisfied (NO at S10), the selector 52k refers to the monitoring result output from the second monitor 52f (S11). Based on the referenced monitoring result from the second monitor 52f, the selector 52k determines whether or not the fourth condition is satisfied (S12).

Upon determining that the communication status between the communicator 51 and the vehicle communicator 21 is good and the fourth condition is not satisfied (NO at S12), the selector 52k generates an area E defined by a polygon connecting the reference points RP of the three base stations 30 selected at step S4 (S13). The selector 52k determines whether the working machine 1 is located outside the generated area E, and whether the first condition is satisfied (S14).

Upon determining that the working machine 1 is located inside the area E and the first condition is not satisfied (NO at S14), the selector 52k calculates the relative distance RD between the working machine 1 and one of the reference points RP of the three base stations 30 selected at step S4 that is closest to the working machine 1 (S15). The selector 52k determines whether or not the relative distance RD is greater than or equal to the first threshold and the second condition is satisfied (S16).

Upon determining that the relative distance RD is below the first threshold and the second condition is not satisfied (NO at S16), the selector 52k refers to the first suitability table stored in the storing device 53 (S17). Based on the formatted data including the identification information of the vehicle position detector 22 acquired at step S2 and the referenced first suitability table, the selector 52k determines whether the vehicle position detector 22 is incapable of performing positioning using the VRS-GNSS and the seventh condition is satisfied (S18).

Upon determining that the vehicle position detector 22 is capable of performing positioning using VRS-GNSS and the seventh condition is not satisfied (NO at S18), the selector 52k refers to the monitoring result output from the first monitor 52e (S19). Based on the referenced monitoring result from the first monitor 52e, the selector 52k determines whether the communication status between the vehicle position detector 22 and positioning satellite(s) G is bad and the third condition is satisfied (S20).

Upon determining that the communication status between the vehicle position detector 22 and the positioning satellite(s) G is good and the third condition is not satisfied (NO at S20), the selector 52k refers to the monitoring result output from the fifth monitor 52g (S21). Based on the referenced monitoring result from the fifth monitor 52g, the selector 52k determines whether the status of the second generator 52m2 is normal and the sixth condition is satisfied (S22).

Upon determining that the status of the second generator 52m2 is normal and the sixth condition is not satisfied (NO at S22), the selector 52k refers to the monitoring result output from the third monitor 52i (S23). Based on the referenced monitoring result from the third monitor 52i, the selector 52k determines whether or not the fifth condition is satisfied (S24).

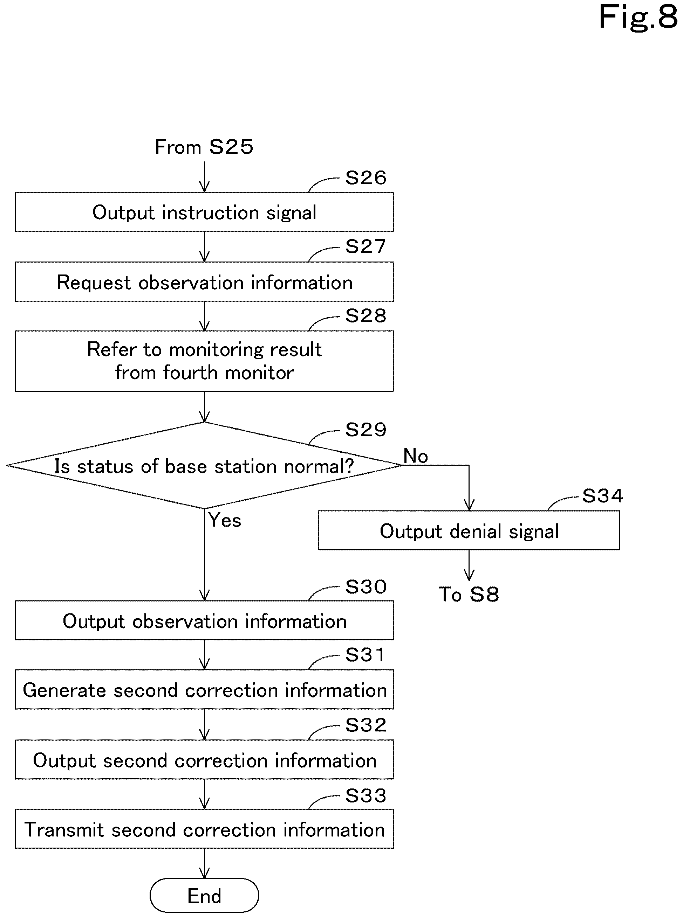

Upon determining that all the first to fourth detection accuracies are greater than or equal to the criterion values and the fifth condition is not satisfied (NO at S24), the selector 52k selects second correction information (S25). As illustrated in FIG. 8, the selector 52k generates an instruction signal that is based on the identification information of each of the three base stations 30 selected at step S4, and outputs the instruction signal to the generator 52m (S26). With this, the generator 52m requests the manager 521 for observation information for use in generating the second correction information (S27).

The manager 521 refers to the monitoring result output from the fourth monitor 52d (S28). Based on the identification information of each of the three base stations 30 included in the instruction signal and based on the monitoring result from the fourth monitor 52d, the manager 521 determines whether the status of the base stations 30 selected by the selector 52k and corresponding to the second correction information is normal or abnormal (S29).

Upon determining that the status of the three base stations 30 selected by the selector 52k and corresponding to the second correction information is normal (YES at S29), the manager 521 outputs, to the generator 52m, the observation information that is based on the satellite signal(s) received by the base stations 30 in the normal status (S30). Based on the observation information (satellite signal(s)) output from the manager 521, the reference points RP of the three or more base stations 30, and/or the like, the generator 52m (second generator 52m2) generates the second correction information including the virtual reference point VRP (S31).

The generator 52m outputs the generated correction information to the transmission controller 52n, and the transmission controller 52n outputs, to the communication controller 52a, the second correction information at predetermined time interval(s) (S32). The communication controller 52a controls the communicator 51 to cause the communicator 51 to transmit the second correction information to the vehicle communicator 21 (S33).

Upon determining that the status of the base stations 30 selected by the selector 52k and corresponding to the second correction information is abnormal (NO at S29), the manager 521 does not output the satellite signal(s) received by the base station(s) 30 in the abnormal status to the generator 52m but outputs a denial signal, and the generator 52m outputs the denial signal to the selector 52k (S34). Based on the denial signal output from the generator 52m, the selector 52k proceeds to step S8.

With this, when none of the first to eighth condition are satisfied, the selector 52k preferentially selects the second correction information which is based on the satellite signal(s) received by the three base stations 30 closest to the working machine 1 over other correction information.

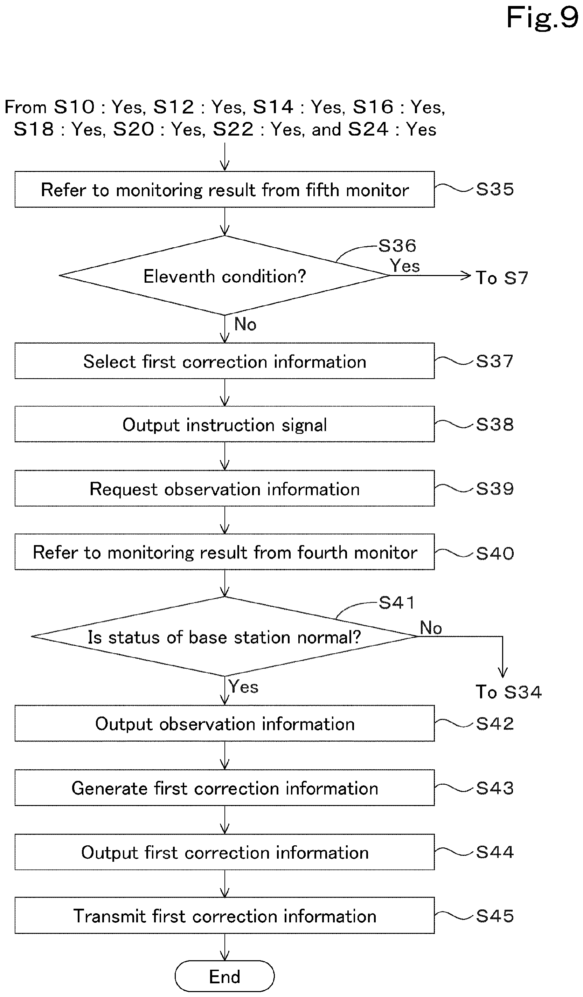

In contrast, as illustrated in FIG. 9, upon determining that the corresponding condition (any of first to eighth conditions) is satisfied at step S10, S12, S14, S16, S18, S20, S22, or S24, in other words, when any of the first to eighth conditions are/is satisfied, the selector 52k refers to the monitoring result output from the fifth monitor 52g (S35). Based on the referenced monitoring result from the fifth monitor 52g , the selector 52k determines whether the eleventh condition is satisfied (S36).

Upon determining that the first generator 52m1 is in the abnormal status and the eleventh condition is satisfied (YES at S36), the selector 52k proceeds to step S7. Upon determining that the first generator 52m1 is in the normal status and the eleventh condition is not satisfied (NO at S36), the selector 52k selects first correction information based on the base station 30 closest to the working machine 1, out of the three base stations 30 selected at step S4 (S37). The selector 52k generates an instruction signal that is based on the identification information of the base station 30 closest to the working machine 1, and outputs the instruction signal to the generator 52m (S38). With this, the generator 52m requests the manager 521 for the observation information for use in generating the first correction information (S39).

The manager 521 refers to the monitoring result output from the fourth monitor 52d (S40). Based on the identification information of the base station 30 included in the instruction signal and the monitoring result from the fourth monitor 52d, the manager 521 determines whether the base station 30 corresponding to the first correction information selected by the selector 52k is normal or abnormal (S41).

Upon determining that the status of the base station 30 corresponding to the first correction information selected by the selector 52k is normal (YES at S41), the manager 521 outputs, to the generator 52m, the observation information which is based on the satellite signal(s) received by the base station 30 in the normal status (S42). The generator 52m (first generator 52m1) generates first correction information that is based on the observation information (satellite signal(s)) output from the manager 521 and based on the reference point RP of the base station 30 that has received the satellite signal(s) (S43).

With this, the generator 52m outputs the generated first correction information to the transmission controller 52n, and the transmission controller 52n outputs the first correction information to the communication controller 52a at predetermined time interval(s) (S44). The communication controller 52a controls the communicator 51 to cause the communicator 51 to transmit the first correction information to the vehicle communicator 21 (S45).

Upon determining that the status of the base station 30 corresponding to the first correction information selected by the selector 52k is abnormal (NO at S41), the manager 521 proceeds to step S34.

With this, when any of the first to eighth conditions is satisfied, the selector 52k preferentially selects the first correction information which is based on the satellite signal(s) received by the base station 30 closest to the working machine 1, over other correction information.

Note that the process performed by the selector 52k to select first correction information or second correction information (S1 to S6, S8 to S25, S35 to S37) may be referred to as a first step, and that the process performed by the communicator 51 to transmit the first correction information or the second correction information to the working machine 1 (S33, S45) may be referred to as a second step.

Example embodiments of the present invention provide assistance devices 50 for working machines 1, assistance systems S for working machines 1, and assistance methods for working machines 1, described in the following items.

(Item 1) An assistance device 50 for a working machine 1, the assistance device 50 including a first acquirer 52c1 to acquire, from base stations 30 at respective predetermined reference points RP, one or more satellite signals from one or more positioning satellites G received by the base stations 30, a generator 52m to generate one or more pieces of first correction information each based on at least one satellite signal acquired by the first acquirer 52c1 and based on the corresponding reference point RP of one of the base stations 30 that has received the at least one satellite signal, and generate one or more pieces of second correction information each based on at least one satellite signal received by three or more of the base stations 30 and based on the corresponding reference points RP of the three or more of the base stations 30, the one or more pieces of second correction information each including a virtual reference point VRP, a selector 52k to select a piece of first correction information or a piece of second correction information of the one or more pieces of first correction information and the one or more pieces of second correction information to be generated by the generator 52m, and a communicator 51 to transmit, to the working machine 1, the piece of first correction information or the piece of second correction information selected by the selector 52k, wherein the selector 52k is configured or programmed to select the piece of first correction information or the piece of second correction information based on a positional relationship between the working machine 1 and an area E defined by a polygon connecting the corresponding reference points RP of the three or more of the base stations 30.

With the assistance device 50 for the working machine 1 according to item 1, it is possible to appropriately select the position detection using the first correction information that is based on the reference point RP of the base station 30 (i.e., position detection using RRS-GNSS) or the position detection using the second correction information that is based on the virtual reference point VRP (i.e., position detection using VRS-GNSS).

(Item 2) The assistance device 50 for the working machine 1 according to item 1, wherein the selector 52k is configured or programmed to, when the working machine 1 is located outside the area E, preferentially select one of the one or more pieces of first correction information that is based on at least one satellite signal received by one of the base stations 30 that is closest to the working machine 1.

In performing positioning using VRS-GNSS when the working machine 1 is located outside the area E, the second correction information is generated through estimation by extrapolation instead of interpolation, and this may prevent maintaining positioning accuracy. However, with the assistance device 50 for the working machine 1 according to item 2, RRS-GNSS positioning is used complementary in place of VRS-GNSS positioning, allowing the working machine 1 to perform position detection with relatively high accuracy.

(Item 3) The assistance device 50 for the working machine 1 according to item 1 or 2, wherein the selector 52k is configured or programmed to, when a relative distance RD between the working machine 1 and one of the reference points RP of the three of the base stations 30 that is closest to the working machine 1 is greater than or equal to a first threshold, preferentially select one of the one or more pieces of first correction information that is based on at least one satellite signal received by one of the base stations 30 that is closest to the working machine 1.

When the relative distance RD between the working machine 1 and one of the reference points RP of the three base stations 30 that is closest to the working machine 1 is greater than or equal to a predetermined distance, in other words, when the area E is relatively large, the positioning accuracy may not be maintained in the position detection using the second correction information. However, with the assistance device 50 for the working machine 1 according to item 2, RRS-GNSS positioning is used complementary in place of VRS-GNSS positioning, allowing the working machine 1 to perform position detection with relatively high accuracy.

(Item 4) The assistance device 50 for the working machine 1 according to any one of items 1 to 3, further including a first monitor 52e to monitor a communication status between (i) a vehicle position detector 22 in or on the working machine 1 to receive satellite signals from the one or more positioning satellites G and (ii) the one or more positioning satellites G, wherein the selector 52k is configured or programmed to, when the communication status between the vehicle position detector 22 and the one or more positioning satellites G is bad, preferentially select one of the one or more pieces of first correction information that is based on at least one satellite signal received by one of the base stations 30 that is closest to the working machine 1.

When the communication status between the position detector and the positioning satellite(s) G is bad, there may be cases where the position detection of the working machine 1 is significantly deteriorated and the positioning accuracy of VRS-GNSS positioning also decreases. However, with the assistance device 50 for the working machine 1 according to item 4, RRS-GNSS positioning is used complementary in place of VRS-GNSS positioning, allowing the working machine 1 to perform position detection with relatively high accuracy.

(Item 5) The assistance device 50 for the working machine 1 according to item 4, wherein the communication status between the vehicle position detector 22 and the one or more positioning satellites G monitored by the first monitor 52e includes an intensity of radio waves received by the vehicle position detector 22 from the one or more positioning satellites G, and the selector 52k is configured or programmed to, when the intensity of radio waves is below a second threshold and indicates that the communication status between the vehicle position detector 22 and the one or more positioning satellites G is bad, preferentially select one of the one or more pieces of first correction information that is based on at least one satellite signal received by one of the base stations 30 that is closest to the working machine 1.

With the assistance device 50 for the working machine 1 according to item 5, the selector 52k is capable of more reliably determining the communication status between the position detector and the positioning satellite(s) G based on the intensity of radio waves transmitted from the positioning satellites(s) G to the position detector.

(Item 6) The assistance device 50 for the working machine 1 according to any one of items 1 to 5, further including a second monitor 52f to monitor a communication status between the communicator 51 and the working machine 1, wherein the selector 52k is configured or programmed to, when the communication status between the communicator 51 and the working machine 1 is bad, preferentially select one of the one or more pieces of first correction information that is based on at least one satellite signal received by one of the base stations 30 that is closest to the working machine 1.

When the communication status between the communicator 51 and the working machine 1 is bad, a delay may occur in the transmission of the second correction information from the communicator 51 to the working machine 1 and/or in bringing the selection made by the selector 52k between VRS-GNSS and RRS-GNSS into effect. However, with the aforementioned configuration, RRS-GNSS positioning is used complementary in place of VRS-GNSS positioning, allowing the working machine 1 to perform position detection with relatively high accuracy.

(Item 7) The assistance device 50 for the working machine 1 according to item 6, wherein the communication status between the communicator 51 and the working machine 1 monitored by the second monitor 52f includes a degree of delay in communication between the communicator 51 and the working machine 1, and the selector 52k is configured or programmed to, when the degree of delay is greater than or equal to a third threshold and indicates that the communication status between the communicator 51 and the working machine 1 is bad, preferentially select one of the one or more pieces of first correction information that is based on at least one satellite signal received by one of the base stations 30 that is closest to the working machine 1.

With the assistance device 50 for the working machine 1 according to item 7, the selector 52k can more reliably determine the communication status between the communicator 51 and the working machine 1 based on the degree of delay in the communication between the communicator 51 and the working machine 1.

(Item 8) The assistance device 50 for the working machine 1 according to any one of items 1 to 7, further including a third monitor 52i to monitor a positioning accuracy which is an accuracy of position detection based on one or more of the one or more pieces of second correction information, wherein the selector 52k is configured or programmed to, when the positioning accuracy is lower than a criterion value, preferentially select one of the one or more pieces of first correction information that is based on at least one satellite signal received by one of the base stations 30 that is closest to the working machine 1.

With the assistance device 50 for the working machine 1 according to item 8, the selector 52k can more appropriately select RRS-GNSS positioning or VRS-GNSS positioning based on the positioning accuracies of VRS-GNSS, in addition to the positional relationship between the working machine 1 and the area E defined by the polygon connecting the reference points RP of the three base stations 30.

(Item 9) The assistance device 50 for the working machine 1 according to item 8, wherein the third monitor 52i is configured or programmed to calculate, using one or more of the one or more pieces of second correction information, a position of another of the base stations 30 other than the three or more of the base stations 30, and monitor the positioning accuracy based on a positional deviation PD of the calculated position of the another of the base stations 30 from the corresponding reference point RP of the another of the base stations 30.

With the assistance device 50 for the working machine 1 according to item 9, because the reference points RP of the base stations 30 are absolute positions, the positioning accuracy of the positioning based on the second correction information (i.e. the positioning using VRS-GNSS) can be more appropriately calculated.

(Item 10) The assistance device 50 for the working machine 1 according to item 8 or 9, further including a memory and/or a storage 53 to store one or more combinations of the positioning accuracy and the three or more of the base stations, wherein the selector 52k is configured or programmed to, when the positioning accuracy stored in the memory and/or the storage 53 is lower than the criterion value, preferentially select one of the one or more pieces of first correction information that is based on at least one satellite signal received by one of the base stations 30 that is closest to the working machine 1.

With the assistance device 50 for the working machine 1 according to item 10, it is possible to select RRS-GNSS positioning or VRS-GNSS positioning more promptly and appropriately while reducing the load on the assistance device 50.

(Item 11) The assistance device 50 for the working machine 1 according to any one of items 8 to 10, further including a second acquirer 52b1 to acquire work content which is content of work to be done by a working device 2 of the working machine 1, and a changer 52j to modify the criterion value based on the work content acquired by the second acquirer.

With the assistance device 50 for the working machine 1 according to item 11, it is possible to select RRS-GNSS positioning or VRS-GNSS positioning more appropriately depending on the work content.

(Item 12) The assistance device 50 for the working machine 1 according to any one of items 1 to 11, further including a fourth monitor 52d to monitor a status of each of the base stations 30, and a manager 521 to manage the one or more satellite signals acquired by the first acquirer 52c1 and to output the one or more satellite signals to the generator 52m, wherein the selector 52k is configured or programmed to use base stations 30 in which the status is normal as one of the base stations 30 that is closest to the working machine 1 and the three or more of the base stations 30, and not use base stations 30 in which the status is abnormal as the one of the base stations 30 that is closest to the working machine 1 or the three or more of the base stations 30, and the manager 521 is configured or programmed to output, to the generator 52m, one or more satellite signals received by base stations 30 in which the status is normal, and to not output, to the generator 52m, one or more satellite signals received by base stations 30 in which the status is abnormal.

With the assistance device 50 for the working machine 1 according to item 12, since the assistance device 50 filters out base stations 30 in the abnormal status multiple times at different points in time, it is possible to more reliably eliminate or reduce the likelihood that the working machine 1 will perform positioning using RRS-GNSS or VRS-GNSS based on the satellite signals received by the base stations 30 in the abnormal status.

(Item 13) The assistance device 50 for the working machine 1 according to any one of items 1 to 12, further including a second acquirer 52b1 to acquire identification information of a vehicle position detector 22 in or on the working machine 1 to detect a position of the working machine 1, and a memory and/or a storage 53 to store a management table including one or more combinations of the identification information and whether the vehicle position detector 22 is suitable for position detection using second correction information, wherein the selector 52k is configured or programmed to, if the identification information and the management table show that the vehicle position detector 22 is unsuitable for the position detection using second correction information, preferentially select one of the one or more pieces of first correction information that is based on at least one satellite signal received by one of the base stations 30 that is closest to the working machine.

With the assistance device 50 for the working machine 1 according to item 13, it is possible to eliminate or reduce the likelihood that the working machine 1 will perform VRS-GNSS positioning when the position detector is unsuitable for VRS-GNSS positioning and perform inaccurate position detections.

(Item 14) An assistance system S for a working machine1, the assistance system S including the assistance device 50 according to any one of items 1 to 13, and the working machine 1.

With the assistance system S for the working machine 1 according to item 14, it is possible to provide assistance systems S for working machines 1 that can achieve the advantageous effects achieved by the assistance devices 50 for working machines 1.

(Item 15) An method of assisting a working machine 1, the method including a first step including causing a selector 52k of an assistance device 50 to select first correction information or second correction information, the first correction information being based on one or more satellite signals from one or more positioning satellites G received by a base station 30 and based on a reference point RP of the base station 30 having received the one or more satellite signals, the second correction information being based on one or more satellite signals received by three or more base stations 30 and based on reference points RP of the respective three or more base stations 30, the second correction information including a virtual reference point VRP, and a second step including causing a communicator 51 of the assistance device 50 to transmit, to the working machine 1, the first correction information or the second correction information selected by the selector 52k in the first step, wherein the first step includes causing the selector 52k to select the first correction information or the second correction information based on a positional relationship between the working machine 1 and an area E defined by a polygon connecting the reference points RP of the three or more base stations 30.

With the method of assisting a working machine 1 according to item 15, it is possible to appropriately select the position detection using the first correction information that is based on the reference point RP of a base station 30 (i.e., positioning using RRS-GNSS) or the position detection using the second correction information that is based on the virtual reference point VRP relating to a plurality of base stations 30 (i.e., positioning using VRS-GNSS).

While embodiments of the present invention have been described above, it is to be understood that the embodiments disclosed herein are considered as examples in all aspects and are not considered as limitations. The scope of the present invention is to be determined not by the foregoing description but by the claims, and is intended to include all variations and modifications within the scope of the claims and their equivalents.

### Reference Signs List

1 working machine
2 working device
22 vehicle position detector
30 base station
50 assistance device
51 communicator
52b1 second acquirer
52c1 first acquirer
52d fourth monitor
52e first monitor
52f second monitor
52i third monitor
52j changer
52k selector
521 manager
52m generator
53 storing device
E area
G positioning satellite
PD the positional deviation
RD relative distance
RP reference point
S assistance system
VRP virtual reference point

## Claims

1. An assistance device for a working machine, the assistance device comprising:
a first acquirer to acquire, from base stations at respective predetermined reference points, one or more satellite signals from one or more positioning satellites received by the base stations;
a generator to:
generate one or more pieces of first correction information each based on at least one satellite signal acquired by the first acquirer and based on the corresponding reference point of one of the base stations that has received the at least one satellite signal; and
generate one or more pieces of second correction information each based on at least one satellite signal received by three or more of the base stations and based on the corresponding reference points of the three or more of the base stations, the one or more pieces of second correction information each including a virtual reference point;
a selector to select a piece of first correction information or a piece of second correction information of the one or more pieces of first correction information and the one or more pieces of second correction information to be generated by the generator; and
a communicator to transmit, to the working machine, the piece of first correction information or the piece of second correction information selected by the selector; wherein
the selector is configured or programmed to select the piece of first correction information or the piece of second correction information based on a positional relationship between the working machine and an area defined by a polygon connecting the corresponding reference points of the three or more of the base stations.

2. The assistance device according to claim 1, wherein the selector is configured or programmed to, when the working machine is located outside the area, preferentially select one of the one or more pieces of first correction information that is based on at least one satellite signal received by one of the base stations that is closest to the working machine.

3. The assistance device according to claim 1, wherein the selector is configured or programmed to, when a relative distance between the working machine and one of the reference points of the three of the base stations that is closest to the working machine is greater than or equal to a first threshold, preferentially select one of the one or more pieces of first correction information that is based on at least one satellite signal received by one of the base stations that is closest to the working machine.

4. The assistance device according to claim 1, further comprising:
a first monitor to monitor a communication status between (i) a vehicle position detector in or on the working machine to receive satellite signals from the one or more positioning satellites and (ii) the one or more positioning satellites; wherein
the selector is configured or programmed to, when the communication status between the vehicle position detector and the one or more positioning satellites is bad, preferentially select one of the one or more pieces of first correction information that is based on at least one satellite signal received by one of the base stations that is closest to the working machine.

5. The assistance device according to claim 4, wherein
the communication status between the vehicle position detector and the one or more positioning satellites monitored by the first monitor includes an intensity of radio waves received by the vehicle position detector from the one or more positioning satellites; and
the selector is configured or programmed to, when the intensity of radio waves is below a second threshold and indicates that the communication status between the vehicle position detector and the one or more positioning satellites is bad, preferentially select one of the one or more pieces of first correction information that is based on at least one satellite signal received by one of the base stations that is closest to the working machine.

6. The assistance device according to claim 1, further comprising:
a second monitor to monitor a communication status between the communicator and the working machine; wherein
the selector is configured or programmed to, when the communication status between the communicator and the working machine is bad, preferentially select one of the one or more pieces of first correction information that is based on at least one satellite signal received by one of the base stations that is closest to the working machine.

7. The assistance device according to claim 6, wherein
the communication status between the communicator and the working machine monitored by the second monitor includes a degree of delay in communication between the communicator and the working machine; and
the selector is configured or programmed to, when the degree of delay is greater than or equal to a third threshold and indicates that the communication status between the communicator and the working machine is bad, preferentially select one of the one or more pieces of first correction information that is based on at least one satellite signal received by one of the base stations that is closest to the working machine.

8. The assistance device according to claim 1, further comprising:
a third monitor to monitor a positioning accuracy which is an accuracy of position detection based on one or more of the one or more pieces of second correction information; wherein
the selector is configured or programmed to, when the positioning accuracy is lower than a criterion value, preferentially select one of the one or more pieces of first correction information that is based on at least one satellite signal received by one of the base stations that is closest to the working machine.

9. The assistance device according to claim 8, wherein the third monitor is configured or programmed to:
calculate, using one or more of the one or more pieces of second correction information, a position of another of the base stations other than the three or more of the base stations; and
monitor the positioning accuracy based on a positional deviation of the calculated position of the another of the base stations from the corresponding reference point of the another of the base stations.

10. The assistance device according to claim 9, further comprising:
a memory and/or a storage to store one or more combinations of the positioning accuracy and the three or more of the base stations; wherein
the selector is configured or programmed to, when the positioning accuracy stored in the memory and/or the storage is lower than the criterion value, preferentially select one of the one or more pieces of first correction information that is based on at least one satellite signal received by one of the base stations that is closest to the working machine.

11. The assistance device according to claim 8, further comprising:
a second acquirer to acquire work content which is content of work to be done by a working device of the working machine; and
a changer to modify the criterion value based on the work content acquired by the second acquirer.

12. The assistance device according to claim 1, further comprising:
a fourth monitor to monitor a status of each of the base stations; and
a manager to manage the one or more satellite signals acquired by the first acquirer and to output the one or more satellite signals to the generator; wherein
the selector is configured or programmed to use base stations in which the status is normal as one of the base stations that is closest to the working machine and the three or more of the base stations, and not use base stations in which the status is abnormal as the one of the base stations that is closest to the working machine or the three or more of the base stations; and
the manager is configured or programmed to output, to the generator, one or more satellite signals received by base stations in which the status is normal, and to not output, to the generator, one or more satellite signals received by base stations in which the status is abnormal.

13. The assistance device according to claim 1, further comprising:
a second acquirer to acquire identification information of a vehicle position detector in or on the working machine to detect a position of the working machine; and
a memory and/or a storage to store a management table including one or more combinations of the identification information and whether the vehicle position detector is suitable for position detection using second correction information; wherein
the selector is configured or programmed to, if the identification information and the management table show that the vehicle position detector is unsuitable for the position detection using second correction information, preferentially select one of the one or more pieces of first correction information that is based on at least one satellite signal received by one of the base stations that is closest to the working machine.

14. An assistance system for a working machine, the assistance system comprising:
the assistance device according to any one of claims 1 to 13; and
the working machine.

15. A method of assisting a working machine, the method comprising:
a first step including causing a selector of an assistance device to select first correction information or second correction information, the first correction information being based on one or more satellite signals from one or more positioning satellites received by a base station and based on a reference point of the base station having received the one or more satellite signals, the second correction information being based on one or more satellite signals received by three or more base stations and based on reference points of the respective three or more base stations, the second correction information including a virtual reference point; and
a second step including causing a communicator of the assistance device to transmit, to the working machine, the first correction information or the second correction information selected by the selector in the first step; wherein
the first step includes causing the selector to select the first correction information or the second correction information based on a positional relationship between the working machine and an area defined by a polygon connecting the reference points of the three or more base stations.
